# EUROPEAN PATENT APPLICATION

(11) **EP 4 431 219 A1**
(43) Date of publication of application: **18.09.2024**
(21) Application number: 21964071.1
(22) Date of filing: 11.11.2021
(51) Int. Cl.: B23K 26/02

(54) **OPTICAL PROCESSING DEVICE**

(71) Applicant: NIKON CORPORATION, Minato-ku Tokyo 108-6290 (JP)
(72) Inventor: KAWABE, Yoshio, Tokyo 108-6290 (JP)
(74) Representative: Hoffmann Eitle
(86) International application number: PCT/JP2021/041626
(87) International publication number: WO 2023/084716

(57) **Abstract**

An optical processing device (1) includes: a robot arm (10); and a beam-transmission optical system (30), wherein the robot arm (10) includes a first arm part (11), a first joint part (16), a second arm part (12), a second joint part (17), and a third arm part (13), and the beam-transmission optical system (30) includes a first optical-path changing part (31) that changes the traveling direction of a laser beam (BM) such that the laser beam (BM) travels along a first optical path (C1) beside the first arm part (11) in accordance with the rotation of the first arm part (11) performed by the first joint part (16), and a second optical-path changing part (41) that changes the traveling direction of the laser beam (BM) having passed through the first optical path (C1) such that the laser beam (BM) travels along a second optical path (C2) beside the second arm part (12) in accordance with the rotation of the second arm part (12) and the rotation of the third arm part (13) performed by the second joint part (17).

## Description

### TECHNICAL FIELD

The present invention relates to an optical processing apparatus, an optical measurement apparatus, and a beam transmission optical system.

### TECHNICAL BACKGROUND

Conventionally, optical processing apparatuses and optical measurement apparatuses, each of which comprises a laser oscillator, a robot arm, and a beam transmission optical system, have been known, for example, as described in Patent literature 1. Such optical processing apparatuses and optical measurement apparatuses are required to have a high degree of freedom in handling.

### PRIOR ARTS LIST

### PATENT DOCUMENT

Patent literature 1: US Patent Application Publication No. 2020/0080831

### SUMMARY OF THE INVENTION

An optical processing apparatus according to a first aspect of the present invention is an optical processing apparatus comprising: a laser oscillator that oscillates a laser beam; a robot arm; a beam transmission optical system that is attached to the robot arm and transmits the laser beam; and an optical processing head that is attached to the robot arm and irradiates a workpiece with the laser beam, wherein the robot arm includes: a first arm section that extends in a direction of a first axis; a first joint section that supports the first arm section so as to be rotatable around an axis perpendicular to the first axis; a second arm section that is located on a side of the optical processing head with respect to the first arm section and extends in a direction of a second axis; a second joint section that supports the second arm section so as to be rotatable around an axis perpendicular to the second axis with respect to the first arm section; and a third arm section that is located on a side of the optical processing head with respect to the second arm section and is rotatable around the second axis, and the beam transmission optical system includes: a first optical path changing section that changes a traveling direction of the laser beam so that the laser beam follows a first optical path lateral to the first arm section, based on rotation of the first arm section around the axis perpendicular to the first axis through the first joint section; and a second optical path changing section that changes a traveling direction of the laser beam having passed through the first optical path so that the laser beam follows a second optical path lateral to the second arm section, based on rotation of the second arm section around the axis perpendicular to the second axis through the second joint section and rotation of the third arm section around the second axis.

An optical processing apparatus according to a second aspect of the present invention comprises: a laser oscillator that oscillates a laser beam; a robot arm; a base module that supports the robot arm so as to be rotatable around a seventh axis; an optical processing head that irradiates a workpiece with the laser beam; a fourth optical path changing section that changes a traveling direction of the laser beam to a direction intersecting the seventh axis, and thereby guides the laser beam to a lateral side of the robot arm; and a beam transmission optical system that transmits the laser beam, guided by the fourth optical path changing section, toward the optical processing head along a lateral side of the robot arm, wherein at least a part of the fourth optical path is located inside the base module, and the fourth optical path and the seventh axis are parallel.

An optical processing apparatus according to a third aspect of the present invention is an optical processing apparatus comprising: a laser oscillator that oscillates a laser beam; a robot arm; a beam transmission optical system that is attached to the robot arm and transmits the laser beam; and an optical processing head that irradiates a workpiece with the laser beam, wherein the robot arm includes: a first arm section; and a second arm section located on a side of the optical processing head with respect to the first arm section, and the beam transmission optical system includes a second optical path changing section that changes a direction of the laser beam so as to follow a second optical path lateral to the second arm section, based on rotation of the second arm section.

An optical processing apparatus according to a fourth aspect of the present invention is an optical processing apparatus comprising: a laser oscillator that oscillates a laser beam; a robot arm; a beam transmission optical system that is attached to the robot arm and transmits the laser beam; and an optical processing head that irradiates a workpiece with the laser beam, wherein the robot arm includes: a second arm section that extends in a direction of a second axis; and a third arm section that is located on a side of the optical processing head with respect to the second arm section and is rotatable around the second axis, and the beam transmission optical system includes a second optical path changing section that changes a direction of the laser beam so as to follow a second optical path lateral to the second arm section, based on rotation of the third arm section around the second axis.

An optical processing apparatus according to a fifth aspect of the present invention comprises: a laser oscillator that oscillates a laser beam; a robot arm; a base module that rotatably supports the robot arm; a beam transmission optical system that is attached to the robot arm and transmits the laser beam; an optical processing head that irradiates a workpiece with the laser beam; and a fourth optical path changing section that guides the laser beam to a lateral side of the robot arm.

### BRIEF DESCRIPTION OF THE DRAWINGS

FIG. 1 is a schematic diagram showing an optical processing apparatus with an optical processing head facing downward.
FIG. 2 is a schematic diagram showing a logical structure of a robot arm.
FIG. 3 is a cross-sectional view showing an inside of a base module.
FIG. 4 is a schematic diagram showing the optical processing apparatus with the optical processing head facing upward.
FIG. 5 is a schematic diagram showing the optical processing apparatus with the optical processing head facing toward a lateral side on another side.
FIG. 6 is a schematic diagram showing the optical processing apparatus with the optical processing head facing toward a lateral side on one side.
FIG. 7 is an enlarged view showing a light guide section of a beam transmission optical system with a triangular prism located at a first reflection position.
FIG. 8 is an enlarged view showing the light guide section of the beam transmission optical system with the triangular prism located at a second reflection position.
FIG. 9 is an enlarged view showing a collecting optical system of the optical processing head.
FIG. 10A and 10B are enlarged views respectively showing a position adjustment section of the optical processing head.
FIG. 11A and 11B are enlarged views respectively showing a modification of the position adjustment section.
FIG. 12 is a schematic diagram showing an optical measurement apparatus with an optical measurement head facing downward.

### DESCRIPTION OF THE EMBODIMENTS

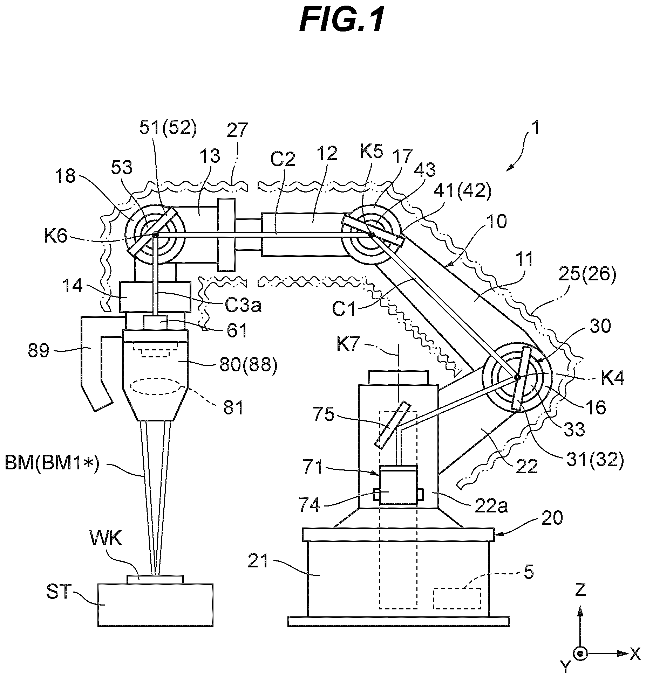

Hereinafter, embodiments according to the present invention will be described. As shown in FIG. 1, an optical processing apparatus 1 according to the present embodiment comprises a laser oscillator 5, a robot arm 10, a base module 20, a beam transmission optical system 30, and an optical processing head 80. In the present embodiment, directions shown by arrows in FIGS. 1 to 6 and 12 are sometimes referred to as an X direction, a Y direction, and a Z direction, respectively. FIG. 1 is a diagram of the optical processing apparatus 1 viewed from a +Y direction side. The laser oscillator 5 oscillates a laser beam EM, the medium of which is carbon dioxide. The laser beam EM includes laser light with a wavelength of 9.2 µm to 11.4 µm. More specifically, the laser beam BM includes laser light with a wavelength of 9.6 µm or 10.6 µm.

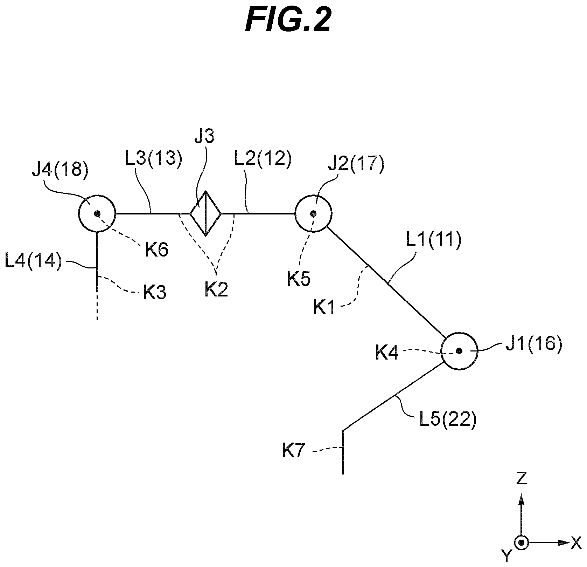

As shown in FIG. 1, the robot arm 10 comprises a first arm section 11, a second arm section 12, a third arm section 13, a fourth arm section 14, a first joint section 16, a second joint section 17, and a third joint section 18. Here, a logical structure of the robot arm 10 is shown in FIG. 2. FIG. 2 is a diagram of the logical structure of the robot arm 10 viewed from the +Y direction side. As shown in FIG. 2, the robot arm 10 is configured with a link mechanism that comprises first to fourth joints J1 to J4 and first to fourth links L1 to L4 and can operate with four-axis degrees of freedom. The first to third links L1 to L3 are links (linkages) that connect the individual joints J1 to J4. The fourth link L4 is a link that connects the fourth joint J4 and the optical processing head 80 (see FIG. 1). Furthermore, the link mechanism of the robot arm 10 is provided with a fifth link L5 that connects the first joint J1 and a base section 21 of the base module 20 (see FIG. 1).

In the present embodiment, an axis within the first link L1 that connects the center point of the first joint J1 and the center point of the second joint J2 with an imaginary line is referred to as a first axis K1. An axis within the second link L2 that connects the center point of the second joint J2 and the center point of the third joint J3 with an imaginary line, and an axis within the third link L3 that connects the center point of the third joint J3 and the center point of the fourth joint J4 with an imaginary line are referred to as a second axis K2. An axis within the fourth link L4 that connects the center point of the fourth joint J4 and the center point of the optical processing head 80 with an imaginary line is referred to as a third axis K3.

The first arm section 11 corresponds to the first link L1 in the link mechanism described above. The first arm section 11 is formed in an arm shape extending along the first axis K1. Note that the first arm section 11 does not need to extend in a longitudinal direction as long as it extends along the first axis K1. A second arm section 12 is arranged on the side of the optical processing head 80 with respect to the first arm section 11.

The second arm section 12 corresponds to the second link L2 in the link mechanism described above. The second arm section 12 is formed in an arm shape extending along the second axis K2. Note that the second arm section 12 does not need to extend in the longitudinal direction as long as it extends along the second axis K2. The third arm section 13 is arranged on the side of the optical processing head 80 with respect to the second arm section 12.

The third arm section 13 corresponds to the third link L3 in the link mechanism described above. The third arm section 13 is formed in an arm shape extending along the second axis K2. Note that the third arm section 13 does not need to extend along in the longitudinal direction as long as it extends along the second axis K2. The third arm section 13 is connected to the second arm section 12 so as to be rotatable around the second axis K2 by an actuator (not shown) such as an electromagnetic motor. The fourth arm section 14 is arranged on the side of the optical processing head 80 with respect to the third arm section 13.

The fourth arm section 14 corresponds to the fourth link L4 in the link mechanism described above. The fourth arm section 14 is formed in an arm shape extending along the third axis K3. Note that the fourth arm section 14 does not need to extend in the longitudinal direction as long as it extends along the third axis K3. The optical processing head 80 is connected to the head end side of the fourth arm section 14.

The first joint section 16 corresponds to the first joint J1 in the link mechanism described above. The first joint section 16 comprises an actuator (not shown) such as an electromagnetic motor, and is provided over the first arm section 11 and an arm support section 22 of the base module 20 (see FIG. 1). The first joint section 16 supports the first arm section 11 so that the first arm section 11 is rotatable around an axis perpendicular to the first axis K1 with respect to the arm support section 22. In the present embodiment, the rotation axis of the first arm section 11 perpendicular to the first axis K1 is referred to as a fourth axis K4. Note that the arm support section 22 of the base module 20 corresponds to the fifth link L5 described above.

The second joint section 17 corresponds to the second joint J2 in the link mechanism described above. The second joint section 17 comprises an actuator (not shown) such as an electromagnetic motor, and is provided over the first arm section 11 and the second arm section 12. The second joint section 17 supports the second arm section 12 so that the second arm section 12 is rotatable around an axis perpendicular to the second axis K2 with respect to the first arm section 11. In the present embodiment, the rotation axis of the second arm section 12 perpendicular to the second axis K2 is referred to as a fifth axis K5.

The third joint section 18 corresponds to the fourth joint J4 in the link mechanism described above. The third joint section 18 comprises an actuator (not shown) such as an electromagnetic motor, and is provided over the third arm section 13 and the fourth arm section 14. The third joint section 18 supports the fourth arm section 14 so that the fourth arm section 14 is rotatable around an axis perpendicular to the third axis K3 with respect to the third arm section 13. In the present embodiment, the rotation axis of the fourth arm section 14 perpendicular to the third axis K3 is referred to as a sixth axis K6.

Note that the actuator of the first joint section 16, the actuator of the second joint section 17, the actuator of the third joint section 18, and the actuator of the third arm section 13 (third joint J3) are communicably connected to a control apparatus (not shown) built into the robot arm 10 or the base module 20 with a communication device such as a cable. The control apparatus transmits control signals to the actuator of the first joint section 16, the actuator of the second joint section 17, the actuator of the third joint section 18, and the actuator of the third arm section 13, to control operation of each actuator. Thereby, the robot arm 10 is operated by control of the control apparatus.

As shown in FIG. 1, the base module 20 comprises a base section 21 and an arm support section 22. The base section 21 is formed in a substantially cylindrical box shape. The base section 21 supports the arm support section 22 so as to be rotatable around an axis extending in the up-down direction by an actuator (not shown) such as an electromagnetic motor. In the present embodiment, the rotation axis of the arm support section 22 is referred to as a seventh axis K7. The arm support section 22 is formed in an arm shape extending obliquely upward from the side of the base section 21. The arm support section 22 is supported by the base section 21 so as to be rotatable around the seventh axis K7 while supporting the robot arm 10. Thereby, the base module 20 supports the robot arm 10 so as to be rotatable around the seventh axis K7.

Note that the actuator of the base section 21 is communicably connected to the aforementioned control apparatus with a communication device such as a cable. The control apparatus transmits control signals to the actuator of the base section 21 to control operation of the actuator of the base section 21. Thereby, the base module 20 (arm support section 22) is operated by control of the control apparatus.

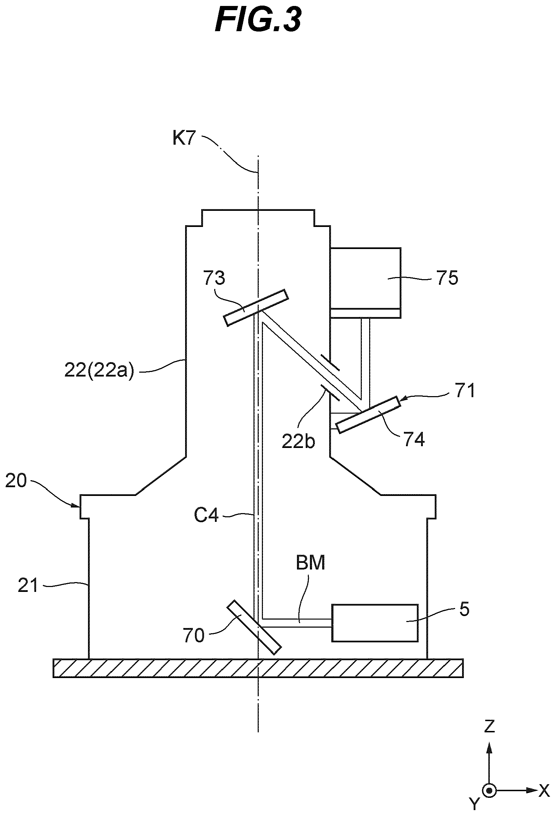

As shown in FIG. 3, the aforementioned laser oscillator 5 and a base mirror 70 are disposed inside the base section 21. FIG. 3 is a diagram of the inside of the base module 20 viewed from the +Y direction side, and shows a state in which the arm support section 22 is rotated by 90 degrees around the seventh axis K7 with respect to the arm support section 22 in FIG. 1. The base mirror 70 is a flat mirror configured with a metal mirror made of a metal with high thermal conductivity such as copper. Note that the base mirror 70 may be configured with a metal mirror having a copper plate plated with gold. The base mirror 70 may be configured with a lightweight and heat-resistant silicon mirror. The base mirror 70 may be configured with a glass mirror. Furthermore, the base mirror 70 may be configured with a built-in water cooling mechanism for cooling the base mirror 70. The method of cooling the base mirror 70 may be a method of blowing gas such as nitrogen gas, argon gas, or air onto the mirror surface (reflective surface) and the method is capable of removing foreign substances such as dust having attached to the mirror surface. For blowing nitrogen gas or argon gas onto the mirror surface, a part of the nitrogen gas or argon gas to be supplied to a workpiece WK may be diverted.

As shown in FIG. 3, the base mirror 70 is attached at a position intersecting the seventh axis K7 inside the base section 21. The base mirror 70 reflects the laser beam BM, oscillated by the laser oscillator 5, upward along the seventh axis K7. Thereby, a part of the optical path of the laser beam BM from the laser oscillator 5 is located inside the base section 21 or inside the base section 22a of the arm support section 22 and is parallel to the seventh axis K7. In the present embodiment, the optical path of the laser beam BM reflected by the base mirror 70 and traveling along the seventh axis K7 is referred to as a fourth optical path C4. The fourth optical path C4 has an optical axis parallel to the seventh axis K7, and has a position remaining unchanged even when the robot arm 10 rotates around the seventh axis K7 together with the arm support section 22.

Furthermore, a fourth optical path changing section 71 is attached to the base module 20. The fourth optical path changing section 71 comprises an internal mirror 73, a first external mirror 74, and a second external mirror 75, as shown in FIGS. 1 and 3. The internal mirror 73, the first external mirror 74, and the second external mirror 75 are flat mirrors having the same configuration as the base mirror 70. As shown in FIG. 3, the internal mirror 73 is attached at a position intersecting the seventh axis K7 inside the base section 22a of the arm support section 22. The internal mirror 73 reflects the laser beam BM having passed through the fourth optical path C4 toward the first external mirror 74. Note that an opening 22b having a size that allows the laser beam BM to pass through is formed at a position between the internal mirror 73 and the first external mirror 74 on the side of the base section 22a of the arm support section 22. The internal mirror 73 is fixed to the base section 22a of the arm support section 22, and can rotate around the seventh axis K7 together with the arm support section 22. As a result, the laser beam BM having passed through the fourth optical path C4 is reflected obliquely downward by the internal mirror 73 and heads toward the first external mirror 74, regardless of the rotation of the robot arm 10 (the base section 22a of the arm support section 22).

As shown in FIGS. 1 and 3, the first external mirror 74 is attached to a lateral side on one side (the front side in the paper surface in FIG. 1) of the base section 22a of the arm support section 22. The first external mirror 74 reflects the laser beam BM from the internal mirror 73 toward the second external mirror 75. As shown in FIGS. 1 and 3, the second external mirror 75 is attached above the first external mirror 74 on the lateral side on the one side of the base section 22a of the arm support section 22. The second external mirror 75 reflects the laser beam BM from the first external mirror 74 toward a lateral side on the one side of the first joint section 16 of the robot arm 10. Thereby, the fourth optical path changing section 71 changes the traveling direction of the laser beam EM, having passed through the fourth optical path C4, into a direction obliquely downward so that the traveling direction intersects the seventh axis K7 on the internal mirror 73 (a direction from the inside to the outside of the base section 22a of the arm support section 22), to change the traveling direction in the direction along the lateral side of the arm support section 22 in the first external mirror 74 and the second external mirror 75, guiding the laser beam BM to the lateral side on the one side of the first joint section 16 of the robot arm 10.

The beam transmission optical system 30 according to the present embodiment is attached to the robot arm 10, as shown in FIG. 1. The beam transmission optical system 30 transmits the laser beam BM guided by the fourth optical path changing section 71 toward the optical processing head 80 along the lateral side of the robot arm 10. The beam transmission optical system 30 comprises a first optical path changing section 31, a second optical path changing section 41, a third optical path changing section 51, and a light guide section 61.

The first optical path changing section 31 comprises a first mirror 32 and a first mirror drive section 33. The first mirror 32 is a flat mirror having the same configuration as the base mirror 70. The first mirror 32 is attached to the lateral side on the one side (the front side of the paper surface in FIG. 1) of the first joint section 16 of the robot arm 10, together with the first mirror drive section 33. The first mirror 32 reflects the laser beam BM, guided by the fourth optical path changing section 71, toward the second optical path changing section 41 along the optical path lateral to the first arm section 11 in the robot arm 10. In the present embodiment, the optical path lateral to the first arm section 11 is referred to as a first optical path C1. The optical axis of the first optical path C1 is parallel to the aforementioned first axis K1.

The first mirror drive section 33 is configured with an actuator (not shown) such as an electromagnetic motor, and rotates the first mirror 32 around the fourth axis K4, which is the same as the rotation axis of the first arm section 11. Specifically, when the first arm section 11 is rotated by α degrees around the fourth axis K4 by the first joint section 16, the first mirror drive section 33 rotates the first mirror 32 by α/2 degrees around the fourth axis K4. Thereby, the first optical path changing section 31 changes the traveling direction of the laser beam BM so that the laser beam BM heads toward the second optical path changing section 41 along the first optical path C1 lateral to the first arm section 11, based on rotation of the first arm section 11 around the fourth axis K4 through the first joint section 16.

Note that the actuator of the first mirror drive section 33 is communicably connected to the aforementioned control apparatus with a communication device such as a cable. Furthermore, a first optical encoder (not shown) built in the actuator of the first joint section 16 is communicably connected to the control apparatus with a communication device such as a cable. The first optical encoder outputs information regarding the rotation angle of the first arm section 11 around the fourth axis K4 through the first joint section 16, to the control apparatus. Based on information regarding the rotation angle input from the first optical encoder, the control apparatus transmits control signals to the actuator of the first mirror drive section 33, to control operation of the actuator of the first mirror drive section 33. For example, when the control apparatus receives information, from the first optical encoder, that the rotation angle of the first arm section 11 around the fourth axis K4 is α degrees, the control apparatus controls operation of the actuator of the first mirror drive section 33 so that the first mirror 32 is rotated by α/2 degrees around the fourth axis K4. Thereby, the first mirror drive section 33 is operated by control of the control apparatus.

The second optical path changing section 41 comprises a second mirror 42 and a second mirror drive section 43. The second mirror 42 is a flat mirror having the same configuration as the base mirror 70. The second mirror 42 is attached to the lateral side on the one side (the front side of the paper surface in FIG. 1) of the second joint section 17 of the robot arm 10, together with the second mirror drive section 43. The second mirror 42 reflects the laser beam BM, having passed through the first optical path C1, toward the third optical path changing section 51 along the optical path lateral to the second arm section 12 of the robot arm 10. In the present embodiment, the optical path lateral to the second arm section 12 is referred to as a second optical path C2.

The second mirror drive section 43 is configured with an actuator (not shown) such as an electromagnetic motor, and can rotate the second mirror 42 around the fifth axis K5, which is the same as the rotation axis of the second arm section 12. Specifically, when the second arm section 12 is rotated by β degrees around the fifth axis K5 by the second joint section 17, the second mirror drive section 43 rotates the second mirror 42 by β/2 degrees around the fifth axis K5. Furthermore, the second mirror drive section 43 can also rotate the second mirror 42 around an axis perpendicular to the fifth axis K5. Specifically, the second mirror drive section 43 rotates the second mirror 42 around an axis perpendicular to the fifth axis K5 in response to the rotation of the third arm section 13 around the second axis K2. As a result, the second optical path changing section 41 changes the traveling direction of the laser beam BM having passed through the first optical path C1 so that the laser beam BM heads toward the third optical path changing section 51 along the second optical path C2 lateral to the second arm section 12, based on rotation of the second arm section 12 around the fifth axis K5 through the second joint section 17 and the rotation of the third arm section 13 around the second axis K2.

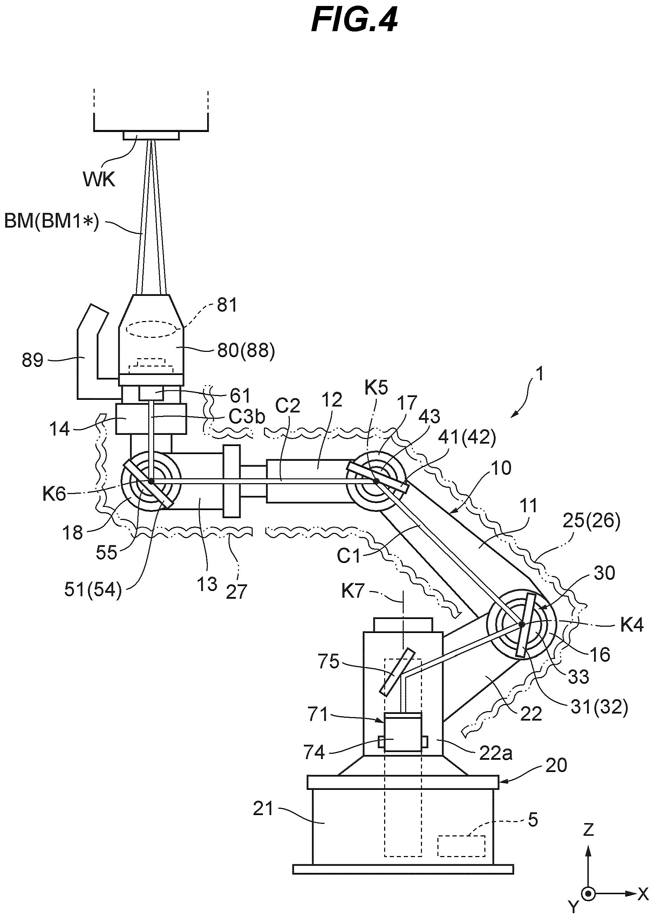

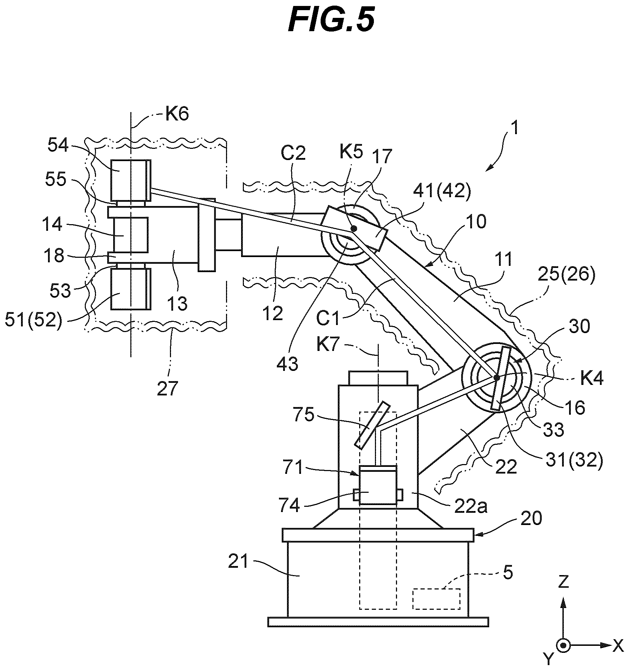

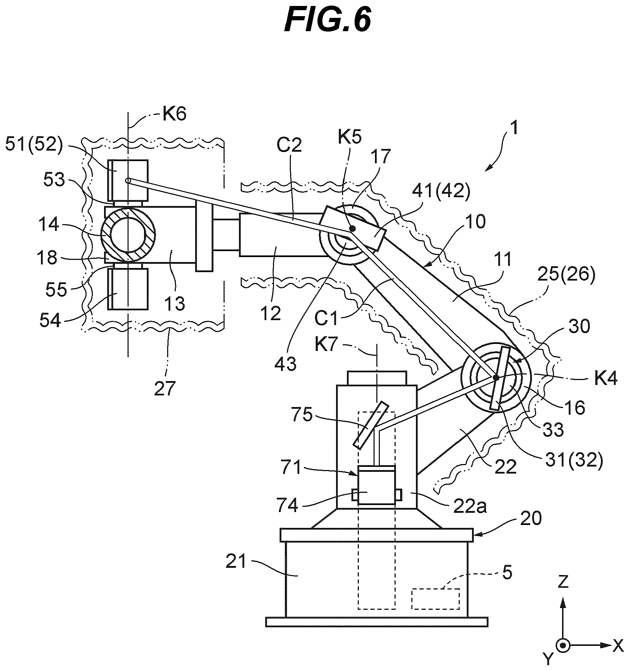

For example, as shown in FIG. 1, when the third arm section 13 rotates to a position where the optical processing head 80 faces downward, the second mirror drive section 43 rotates the second mirror 42 around the fifth axis K5 or around an axis perpendicular to the fifth axis K5 so that the optical axis of the second optical path C2 becomes parallel to the second axis K2. As shown in FIG. 4, when the third arm section 13 rotates to a position where the optical processing head 80 faces upward, the second mirror drive section 43 rotates the second mirror 42 around the fifth axis K5 or around an axis perpendicular to the fifth axis K5 so that the optical axis of the second optical path C2 becomes parallel to the second axis K2. As shown in FIG. 5, when the third arm section 13 rotates to a position where the optical processing head 80 faces toward the lateral side on the other side (the back side of the paper surface in FIG. 5) of the robot arm 10, the second mirror drive section 43 rotates the second mirror 42 around the fifth axis K5 or around an axis perpendicular to the fifth axis K5 so that the optical axis of the second optical path C2 intersects the second axis K2. As shown in FIG. 6, when the third arm section 13 rotates to a position where the optical processing head 80 faces toward the lateral side on the one side (the front side of the paper surface in FIG. 6) of the robot arm 10, the second mirror drive section 43 rotates the second mirror 42 around the fifth axis K5 or around an axis perpendicular to the fifth axis K5 so that the optical axis of the second optical path C2 intersects the second axis K2.

Note that, as aforementioned, FIG. 1 is a diagram of the optical processing apparatus 1 viewed from the +Y direction side, and shows a state in which the optical processing head 80 faces toward the -Z direction. FIG. 4 is a diagram of the optical processing apparatus 1 viewed from the +Y direction side, and shows a state in which the optical processing head 80 faces toward the +Z direction. FIG. 5 is a diagram of the optical processing apparatus 1 viewed from the +Y direction side, and shows a state in which the optical processing head 80 faces toward the -Y direction. FIG. 6 is a diagram of the optical processing apparatus 1 viewed from the +Y direction side, and shows a state in which the optical processing head 80 faces toward the +Y direction.

Note that the actuator of the second mirror drive section 43 is communicably connected to the aforementioned control apparatus with a communication device such as a cable. Furthermore, there are a second optical encoder (not shown) built into the actuator of the second joint section 17, and a third optical encoder (not shown) built into the actuator of the third arm section 13, both of which are communicably connected to the control apparatus with a communication device such as a cable. The second optical encoder outputs information regarding the rotation angle of the second arm section 12 around the fifth axis K5 through the second joint section 17, to the control apparatus. The third optical encoder outputs information regarding the rotation angle of the third arm section 13 around the second axis K2 to the control apparatus. Based on the information regarding the rotation angle input from the second optical encoder and the third optical encoder, the control apparatus transmits control signals to the actuator of the second mirror drive section 43, to control operation of the actuator of the second mirror drive section 43. For example, when the control apparatus receives information, from the second optical encoder, that the rotation angle of the second arm section 12 around the fifth axis K5 is β degrees, the control apparatus controls operation of the actuator of the second mirror drive section 43 so that the second mirror 42 is rotated by β/2 degrees around the fifth axis K5. Thereby, the second mirror drive section 43 is operated by control of the control apparatus.

As shown in FIG. 1 and FIGS. 4 to 6, the third optical path changing section 51 comprises a third-A mirror 52, a third-A mirror drive section 53, a third-B mirror 54, and a third-B mirror drive section 55. The third-A mirror 52 and the third-B mirror 54 are flat mirrors having the same configuration as the base mirror 70. The third-A mirror 52 and the third-B mirror 54 are attached to opposing lateral sides of the third joint section 18 of the robot arm 10, together with the third-A mirror drive section 53 and the third-B mirror drive section 55.

The third-A mirror 52 reflects the laser beam BM having reached the third-A mirror 52 via the second optical path C2, toward the light guide section 61 along the optical path on the lateral side on the side of the third-A mirror 52 with respect to the fourth arm section 14 of the robot arm 10. In the present embodiment, the optical path on the lateral side on the side of the third-A mirror 52 with respect to the fourth arm section 14 is referred to as a third-A optical path C3a. The optical axis of the third-A optical path C3a is parallel to the aforementioned third axis K3. For example, as shown in FIG. 1, when the third arm section 13 rotates to a position where the optical processing head 80 faces downward, the third-A mirror 52 reflects the laser beam BM, having reached the third-A mirror 52 via the second optical path C2, toward the light guide section 61 along the third-A optical path C3a. As shown in FIG. 6, when the third arm section 13 rotates to a position where the optical processing head 80 faces toward the lateral side on the one side (the front side of the paper surface in FIG. 6) of the robot arm 10, the third-A mirror 52 reflects the laser beam BM, having reached the third-A mirror 52 via the second optical path C2, toward the light guide section 61 along the third-A optical path C3a.

The third-B mirror 54 reflects the laser beam EM, having reached the third-B mirror 54 via the second optical path C2, toward the light guide section 61 along the optical path on the lateral side on the side of the third-B mirror 54 with respect to the fourth arm section 14. In the present embodiment, the optical path on the lateral side on the side of the third-B mirror 54 with respect to the fourth arm section 14 is referred to as a third-B optical path C3b. The optical axis of the third-B optical path C3b is parallel to the aforementioned third axis K3. For example, as shown in FIG. 4, when the third arm section 13 rotates to a position where the optical processing head 80 faces upward, the third-B mirror 54 reflects the laser beam EM, having reached the third-B mirror 54 via the second optical path C2, toward the light guide section 61 along the third-B optical path C3b. As shown in FIG. 5, when the third arm section 13 rotates to a position where the optical processing head 80 faces toward the lateral side on the other side (the back side of the paper surface in FIG. 5) of the robot arm 10, the third-B mirror 54 reflects the laser beam BM, having reached the third-B mirror 54 via the second optical path C2, toward the light guide section 61 along the third-B optical path C3b.

The third-A mirror drive section 53 is configured with an actuator (not shown) such as an electromagnetic motor, and can rotate the third-A mirror 52 around the sixth axis K6, which is the same as the rotation axis of the fourth arm section 14. Specifically, when the fourth arm section 14 is rotated by γ degrees around the sixth axis K6 by the third joint section 18, the third-A mirror drive section 53 rotates the third-A mirror 52 by γ/2 degrees around the sixth axis K6. Furthermore, the third-A mirror drive section 53 can also rotate the third-A mirror 52 around an axis perpendicular to the sixth axis K6. Specifically, the third-A mirror drive section 53 rotates the third-A mirror 52 around an axis perpendicular to the sixth axis K6 in response to the rotation of the third arm section 13 around the second axis K2.

The third-B mirror drive section 55 is configured with an actuator (not shown) such as an electromagnetic motor, and can rotate the third-B mirror 54 around the sixth axis K6, which is the same as the rotation axis of the fourth arm section 14. Specifically, when the fourth arm section 14 is rotated by γ degrees around the sixth axis K6 by the third joint section 18, the third-B mirror drive section 55 rotates the third-B mirror 54 by γ/2 degrees around the sixth axis K6. Furthermore, the third-B mirror drive section 55 can also rotate the third-B mirror 54 around an axis perpendicular to the sixth axis K6. Specifically, the third-B mirror drive section 55 rotates the third-B mirror 54 around an axis perpendicular to the sixth axis K6 in response to the rotation of the third arm section 13 around the second axis K2. As a result, based on rotation of the fourth arm section 14 around the sixth axis K6 through the third joint section 18 and the rotation of the third arm section 13 around the second axis K2, the third optical path changing section 51 changes the traveling direction of the laser beam BM so that the laser beam BM having passed through the second optical path C2 heads toward the light guide section 61 along the third-A optical path C3a or the third-B optical path C3b.

Note that the actuator of the third-A mirror drive section 53 is communicably connected to the aforementioned control apparatus with a communication device such as a cable. Furthermore, a fourth optical encoder (not shown) built in the actuator of the third joint section 18 and the aforementioned third optical encoder are communicably connected to the control apparatus with a communication device such as a cable. The fourth optical encoder outputs information regarding the rotation angle of the fourth arm section 14 around the sixth axis K6 through the third joint section 18, to the control apparatus. Based on the information regarding the rotation angle input from the fourth optical encoder and the third optical encoder, the control apparatus transmits control signals to the actuator of the third-A mirror drive section 53 to control operation of the actuator of the third-A mirror drive section 53. For example, when the control apparatus receives information, from the fourth optical encoder, that the rotation angle of the fourth arm section 14 around the sixth axis K6 is γ degrees, the control apparatus controls operation of the actuator of the third-A mirror drive section 53 so that the third-A mirror 52 is rotated by γ/2 degrees around the sixth axis K6. Thereby, the third-A mirror drive section 53 is operated by control of the control apparatus.

Furthermore, the actuator of the third-B mirror drive section 55 is communicably connected to the aforementioned control apparatus with a communication device such as a cable. Based on the information regarding the rotation angle input from the fourth optical encoder and the third optical encoder, the control apparatus transmits control signals to the actuator of the third-B mirror drive section 55 to control operation of the actuator of the third-B mirror drive section 55. For example, when the control apparatus receives information, from the fourth optical encoder, that the rotation angle of the fourth arm section 14 around the sixth axis K6 is γ degrees, the control apparatus controls operation of the actuator of the third-B mirror drive section 55 so that the third-B mirror 54 is rotated by γ/2 degrees around the sixth axis K6. Thereby, the third-B mirror drive section 55 is operated by control of the control apparatus.

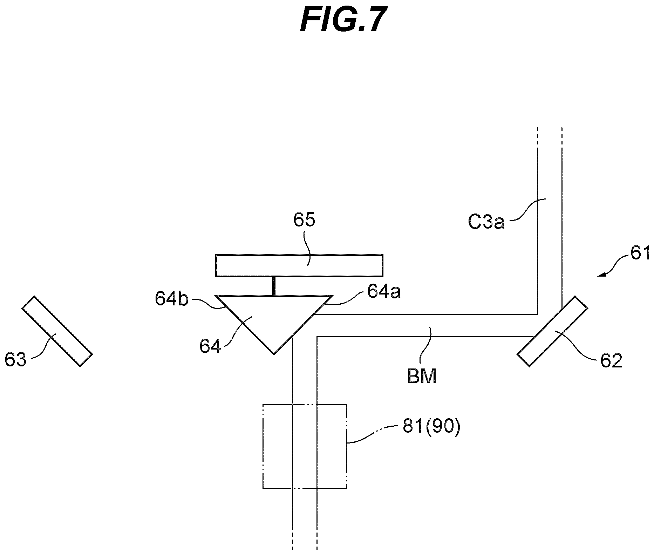

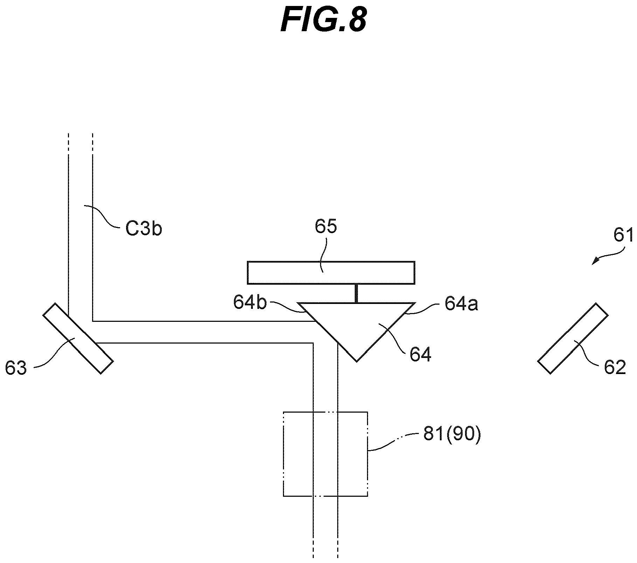

The light guide section 61 is arranged between the fourth arm section 14 of the robot arm 10 and the optical processing head 80, as shown in FIGS. 1 and 4. The light guide section 61 guides the laser beam BM, having passed through the third-A optical path C3a or the third-B optical path C3b, to the optical processing head 80. The light guide section 61 comprises a first light guide mirror 62, a second light guide mirror 63, a triangular prism 64, and a triangular prism drive section 65, as shown in FIGS. 7 and 8.

The first light guide mirror 62 and the second light guide mirror 63 are flat mirrors having the same configuration as the base mirror 70. As shown in FIG. 7, the first light guide mirror 62 is arranged at the end portion of the light guide section 61 on the side of the third-A optical path C3a. The first light guide mirror 62 reflects the laser beam BM, having passed through the third-A optical path C3a, toward a first reflective surface 64a of the triangular prism 64. The second light guide mirror 63 is arranged at the end portion of the light guide section 61 on the side of the third-B optical path C3b. As shown in FIG. 8, the second light guide mirror 63 reflects the laser beam BM, having passed through the third-B optical path C3b, toward a second reflective surface 64b of the triangular prism 64.

The triangular prism 64 is arranged between the first light guide mirror 62 and the second light guide mirror 63, as shown in FIGS. 7 and 8. The triangular prism 64 comprises the first reflective surface 64a that reflects the laser beam BM from the first light guide mirror 62, and the second reflective surface 64b that reflects the laser beam BM from the second light guide mirror 63. The triangular prism drive section 65 linearly moves the triangular prism 64 between a first reflection position (see FIG. 7) where the laser beam BM reflected by the first reflective surface 64a enters a collecting optical system 81 (position adjustment section 90) of the optical processing head 80 and a second reflection position (see FIG. 8) where the laser beam BM reflected by the second reflective surface 64b enters the collecting optical system 81 of the optical processing head 80, along the optical path between the first light guide mirror 62 and the second light guide mirror 63. Such a light guide section 61 can guide the laser beam BM, having passed through the third-A optical path C3a or the third-B optical path C3b, to the collecting optical system 81 of the optical processing head 80, regardless of movement of the robot arm 10.

Note that, as shown by the two-dot chain lines in FIG. 1, for the robot arm 10 to which the beam transmission optical system 30 is attached, it is preferable to attach a cover module 25 capable of covering the lateral side of the robot arm 10 including the optical paths of the laser beam BM (first optical path C1 to third optical path C3). The cover module 25 comprises a first bellows section 26 that is deformable and a second bellows section 27 that is deformable. The first bellows section 26 is formed in a hose shape that covers the lateral side of the portion of the robot arm 10 from the first arm section 11 to the second arm section 12. The second bellows section 27 is formed in a hose shape that covers the lateral side of the portion of the robot arm 10 from the third arm section 13 to the fourth arm section 14. The deformable first bellows section 26 and second bellows section 27 causes the shape of the cover module 25 to be variable according to the movement of the robot arm 10, as shown by the two-dot chain lines in FIGS. 1 and 4 to 6. Thereby, the laser beam BM traveling along the optical path lateral to the robot arm 10 can be prevented from being accessed from the outside. Note that, between the arm support section 22 and the first arm section 11, the cover module 25 may be configured to cover a part of the lateral side of the robot arm 10, which part is the vicinity of the first optical path C1. Furthermore, between the second arm section 12 and the optical processing head 80, the cover module 25 may be configured to cover the lateral side of the entire circumference of the second arm section 12, the third arm section 13, and the fourth arm section 14.

As shown in FIGS. 1 and 4, the optical processing head 80 irradiates the workpiece WK placed at a predetermined position (for example, the upper surface of a stage ST (see FIG. 1), or a part of a large structure) with the laser beam EM transmitted by the beam transmission optical system 30. The optical processing head 80 comprises the collecting optical system 81 that the laser beam BM enters which has been guided to the light guide section 61 of the beam transmission optical system 30, and a lens barrel section 88 that houses and holds the collecting optical system 81. the lens barrel section 88 of the optical processing head 80 comprises a three-dimensional camera 89, attached thereto, that creates a 3D vision (three-dimensional vision) with which the workpiece WK can be recognized three-dimensionally.

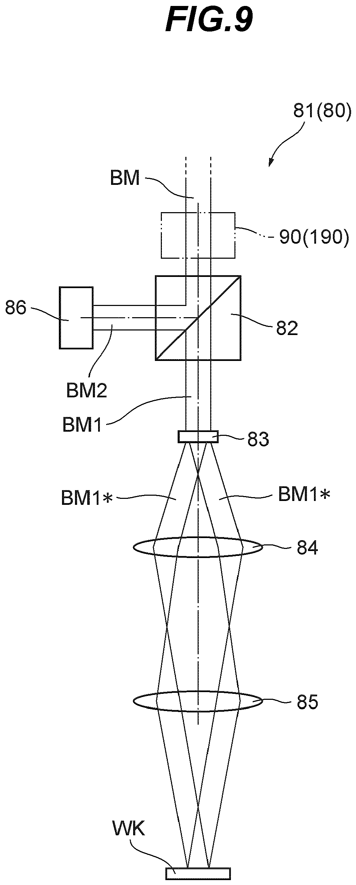

As shown in FIG. 9, the collecting optical system 81 comprises a position adjustment section 90, a light splitting apparatus 82, a diffractive optical element 83, a first collecting lens 84, and a second collecting lens 85, lined up in order along the optical axis from the side of the light guide section 61. The light splitting apparatus 82 is configured with, for example, a beam splitter. The light splitting apparatus 82 splits the laser beam BM, guided by the light guide section 61, into a first laser beam BM1 and a second laser beam BM2 having a smaller amount of light than the first laser beam BM1. The first laser beam BM1 is incident on the diffractive optical element 83. The second laser beam BM2 enters a laser light detection apparatus 86 disposed inside the lens barrel section 88.

The laser light detection apparatus 86 detects the second laser beam BM2 split by the light splitting apparatus 82. The laser light detection apparatus 86 is configured with a four-part photodiode, an image sensor (two-dimensional sensor), and the like. Therefore, based on the position information of the second laser beam BM2 detected by the laser light detection apparatus 86, it is possible to determine the positional deviation of the first laser beam BM1 (laser beam BM) in the direction perpendicular to the optical axis of the collecting optical system 81.

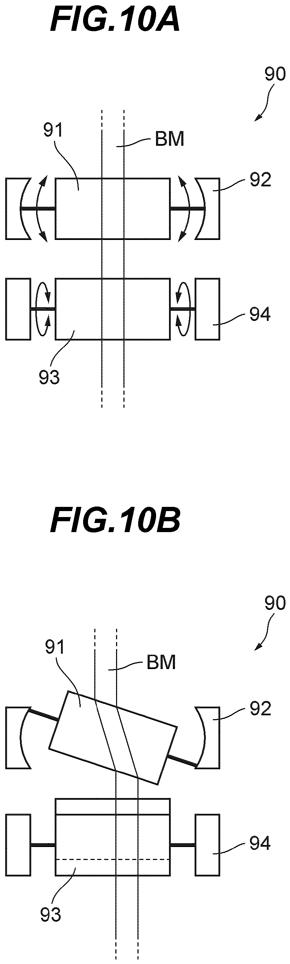

The position adjustment section 90 shifts the laser beams BM (first laser beam BM1 and second laser beam BM2) in a direction perpendicular to the optical axis of the collecting optical system 81, to adjust the first laser beam BM1 so as to eliminate positional deviation in the direction perpendicular to the optical axis of the collecting optical system 81. Based on the position information of the second laser beam BM2 from the laser light detection apparatus 86, the position adjustment section 90 adjusts the first laser beam BM1 so as to eliminate positional deviation in the direction perpendicular to the optical axis of the collecting optical system 81. As an example, the position adjustment section 90 adjusts the incident position of the second laser beam BM2 on the light detection surface of the laser light detection apparatus 86 to be at a desired position, so as to eliminate the positional deviation of the first laser beam BM1. As shown in FIGS. 10A and 10B, the position adjustment section 90 comprises a first parallel flat plate 91, a first flat plate drive section 92, a second parallel flat plate 93, and a second flat plate drive section 94. The first parallel flat plate 91 and the second parallel flat plate 93 are formed with an optical material such as zinc selenide or germanium, for example. The first flat plate drive section 92 supports the first parallel flat plate 91 so as to be rotatable around an axis perpendicular to the optical axis of the collecting optical system 81. The second flat plate drive section 94 supports the second parallel flat plate 93 so as to be rotatable around an axis perpendicular to the optical axis of the collecting optical system 81 and perpendicular to the rotation axis of the first parallel flat plate 91.

When there is no positional deviation in the first laser beam BM1, as shown in FIG. 10A, the first parallel flat plate 91 and the second parallel flat plate 93 are located at initial rotational positions extending perpendicularly to the optical axis of the collecting optical system 81. When there is a positional deviation in the first laser beam BM1, for example, as shown in FIG. 10B, the first flat plate drive section 92 and the second flat plate drive section 94 can rotate at least one of the first parallel flat plate 91 and the second parallel flat plate 93 from the initial rotational position, thereby making it possible to shift the laser beam BM (first laser beam BM1 and second laser beam BM2) two-dimensionally in a direction perpendicular to the optical axis of the collecting optical system 81.

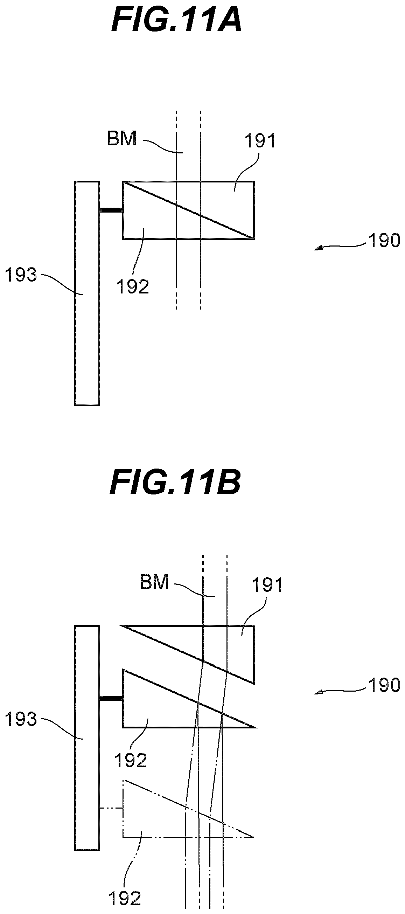

The above-described position adjustment section 90 comprises the first parallel flat plate 91, the first flat plate drive section 92, etc., but is not limited to this. For example, there may be a configuration comprising a first wedge prism 191, a second wedge prism 192, and a wedge prism drive section 193 like the position adjustment section 190 shown in FIGS. 11A and 11B. Such a position adjustment section 190 also can shift the laser beam BM (the first laser beam BM1 and the second laser beam BM2) in a direction perpendicular to the optical axis of the collecting optical system 81, to adjust the first laser beam BM1 so as to eliminate positional deviation in the direction perpendicular to the optical axis of the collecting optical system 81. Note that the first wedge prism 191 and the second wedge prism 192 are formed with an optical material such as zinc selenide or germanium, for example. The wedge prism drive section 193 supports the second wedge prism 192 so that the second wedge prism 192 is movable along the optical axis of the collecting optical system 81. The first wedge prism 191 is fixedly supported inside the lens barrel section 88.

When there is no positional deviation in the first laser beam BM1, the second wedge prism 192 is located at an initial proximity position close to the first wedge prism 191, as shown in FIG. 11A. When there is a positional deviation in the first laser beam BM1, for example, as shown in FIG. 11B, the wedge prism drive section 193 moves the second wedge prism 192 in a direction away from the first wedge prism 191 from the initial proximity position, thereby making it possible to shift the laser beam EM (first laser beam BM1 and second laser beam BM2) in a direction perpendicular to the optical axis of the collecting optical system 81. Furthermore, although detailed illustration is omitted, there are additionally arranged a third wedge prism, a fourth wedge prism, and a second wedge prism drive section that respectively have the same configurations as the first wedge prism 191, the second wedge prism 192, and the wedge prism drive section 193 but are rotationally displaced by 90 degrees with respect to these around the optical axis of the collecting optical system 81, thereby making it possible to shift the laser beam EM (first laser beam BM1 and second laser beam BM2) two-dimensionally in a direction perpendicular to the optical axis of the collecting optical system 81.

Furthermore, the above-described position adjustment section 90 (and position adjustment section 190) are arranged on the incident side of the light splitting apparatus 82, but is not limited to this, and they may be provided between the light splitting apparatus 82 and the diffractive optical element 83 or between the first collecting lens 84 and the second collecting lens 85. In this way, it is preferable that the position adjustment section 90 (and the position adjustment section 190) be provided at a position closer to the workpiece WK. This shortens the optical path length from the position adjustment section 90 (and position adjustment section 190) to the workpiece WK, making it possible to effectively prevent the positional deviation of the laser beam BM (first laser beam BM1).

The diffractive optical element 83 is a transmissive diffractive optical element. Note that the diffractive optical element 83 may be a reflective diffractive optical element. When the first laser beam BM1 enters the diffractive optical element 83, a plurality of first laser beams BM1* split by diffraction are emitted from the diffractive optical element 83. The first collecting lens 84 and the second collecting lens 85 are formed with an optical material such as zinc selenide or germanium, for example. The first collecting lens 84 makes the traveling directions of the plurality of first laser beams BM1*, emitted from the diffractive optical element 83, parallel to each other, and forms a collection point of each of the first laser beams BM1* on the emission side of the first collecting lens 84. The second collecting lens 85 focuses the plurality of mutually parallel first laser beams BM1* having passed through the first collecting lens 84. Here, the diffractive optical element 83 may be arranged at the front focal position of the first collecting lens 84. The rear focal position of the first collecting lens 84 and the front focal position of the second collecting lens 85 may coincide. The surface of the workpiece WK may be located at or near the rear focal position of the second collecting lens 85. In other words, the first collecting lens 84 and the second collecting lens 85 may configure an imaging optical system.

In the optical processing apparatus 1 configured as described above, as shown in FIG. 3, the laser beam BM oscillated by the laser oscillator 5 is reflected by the base mirror 70 and heads toward the fourth optical path changing section 71 along the aforementioned fourth optical path C4. The laser beam BM having passed through the fourth optical path C4 is reflected by the internal mirror 73, the first external mirror 74, and the second external mirror 75 in the fourth optical path changing section 71, and is guided to the lateral side on the one side of the first joint section 16 of the robot arm 10, as shown in FIG. 1. As aforementioned, the optical axis of the fourth optical path C4 is parallel to the seventh axis K7, and, even when the robot arm 10 rotates around the seventh axis K7 together with the arm support section 22, the position of the fourth optical path C4 does not change. Furthermore, the laser beam BM having passed through the fourth optical path C4 is reflected obliquely downward by the internal mirror 73 that rotates together with the robot arm 10 (base section 22a of the arm support section 22) and heads toward the first external mirror 74, regardless of the rotation of the robot arm 10 (the base section 22a of the arm support section 22). Therefore, the laser beam BM having passed through the fourth optical path C4 is guided by the fourth optical path changing section 71 to the lateral side on the one side of the first joint section 16 of the robot arm 10, regardless of the rotation of the robot arm 10 (the base section 22a of the arm support section 22).

The laser beam EM guided by the fourth optical path changing section 71 is reflected by the first mirror 32 of the first optical path changing section 31 in the beam transmission optical system 30, and heads toward the second optical path changing section 41 along the first optical path C1 lateral to the first arm section 11 in the robot arm 10. Here, when the first arm section 11 is rotated by α degrees around the fourth axis K4 by the first joint section 16, the first mirror 32 is rotated by α/2 degrees around the fourth axis K4 by the first mirror drive section 33. Therefore, the laser beam EM guided by the fourth optical path changing section 71 heads toward the second optical path changing section 41 along the first optical path C1 regardless of the rotation of the first arm section 11.

The laser beam BM having passed through the first optical path C1 is reflected by the second mirror 42 of the second optical path changing section 41 in the beam transmission optical system 30, and heads toward the third optical path changing section 51 along the second optical path C2 lateral to the second arm section 12 in the robot arm 10. Here, when the second arm section 12 is rotated by β degrees around the fifth axis K5 by the second joint section 17, the second mirror 42 is rotated by β/2 degrees around the fifth axis K5 by the second mirror drive section 43. Furthermore, in response to the rotation of the third arm section 13 around the second axis K2, the second mirror 42 is rotated by the second mirror drive section 43 around an axis perpendicular to the fifth axis K5. Therefore, the laser beam BM having passed through the first optical path C1 heads toward the third optical path changing section 51 along the second optical path C2 regardless of the rotation of the second arm section 12 and the third arm section 13.

When the third arm section 13 is rotated to a position where the optical processing head 80 faces downward (see FIG. 1), or when the third arm section 13 is rotated to a position where the optical processing head 80 faces toward the lateral side on the one side (the front side of the paper surface in FIG. 6) of the robot arm 10 (see FIG. 6), the laser beam BM having passed through the second optical path C2 is reflected by the third-A mirror 52 of the third optical path changing section 51 in the beam transmission optical system 30, and heads toward the light guide section 61 along the third-A optical path C3a on the lateral side on the side of the third-A mirror 52 with respect to the fourth arm section 14 in the robot arm 10. Here, when the fourth arm section 14 is rotated by γ degrees around the sixth axis K6 by the third joint section 18, the third-A mirror 52 is rotated by γ/2 degrees around the sixth axis K6 by the third-A mirror drive section 53. Furthermore, in response to the rotation of the third arm section 13 around the second axis K2, the third-A mirror 52 is rotated by the third-A mirror drive section 53 around an axis perpendicular to the sixth axis K6. Therefore, the laser beam BM having reached the third-A mirror 52 via the second optical path C2 heads toward the light guide section 61 along the third-A optical path C3a, regardless of the rotation of the fourth arm section 14 and the third arm section 13.

In contrast, when the third arm section 13 is rotated to a position where the optical processing head 80 faces upward (see FIG. 4), or when the third arm section 13 is rotated to a position where the optical processing head 80 faces toward the lateral side on the other side (the back side of the paper surface in FIG. 5) of the robot arm 10 (see FIG. 5), the laser beam BM having passed through the second optical path C2 is reflected by the third-B mirror 54 of the third optical path changing section 51 in the beam transmission optical system 30, and heads toward the light guide section 61 along the third-B optical path C3b on the lateral side on the side of the third-B mirror 54 with respect to the fourth arm section 14 in the robot arm 10. Here, when the fourth arm section 14 is rotated by γ degrees around the sixth axis K6 by the third joint section 18, the third-B mirror 54 is rotated by γ/2 degrees around the sixth axis K6 by the third-B mirror drive section 55. Furthermore, in response to the rotation of the third arm section 13 around the second axis K2, the third-B mirror 54 is rotated around an axis perpendicular to the sixth axis K6 by the third-B mirror drive section 55. Therefore, the laser beam BM having reached the third-B mirror 54 via the second optical path C2 heads toward the light guide section 61 along the third-B optical path C3b regardless of the rotation of the fourth arm section 14 and the third arm section 13.

As shown in FIG. 7, the laser beam BM having passed through the third-A optical path C3a is reflected by the first light guide mirror 62 of the light guide section 61 in the beam transmission optical system 30 and the first reflective surface 64a of the triangular prism 64, and enters the collecting optical system 81 of the optical processing head 80. Note that, at this time, the triangular prism 64 is moved to the aforementioned first reflection position by the triangular prism drive section 65. In contrast, as shown in FIG. 8, the laser beam BM having passed through the third-B optical path C3b is reflected by the second light guide mirror 63 of the light guide section 61 in the beam transmission optical system 30 and the second reflective surface 64b of the triangular prism 64, and enters the collecting optical system 81 of the optical processing head 80. Note that, at this time, the triangular prism 64 is moved to the aforementioned second reflection position by the triangular prism drive section 65. Thereby, regardless of movement of the robot arm 10, the laser beam BM having passed through the third-A optical path C3a or the third-B optical path C3b is guided by the light guide section 61 to the collecting optical system 81 of the optical processing head 80.

The laser beam BM guided by the light guide section 61 to the collecting optical system 81 of the optical processing head 80 enters the light splitting apparatus 82 via the position adjustment section 90 of the collecting optical system 81. A part of the laser beam BM having entered the light splitting apparatus 82 passes through the light splitting apparatus 82 and enters the diffractive optical element 83 as the first laser beam BM1. At this time, the first laser beam BM1 is adjusted by the position adjustment section 90 so that the positional deviation of the first laser beam BM1 is eliminated, and then enters the diffractive optical element 83. In contrast, the remaining part of the laser beam BM having entered the light splitting apparatus 82 is reflected by the light splitting apparatus 82 and enters the laser light detection apparatus 86 as the second laser beam BM2. The second laser beam BM2 having entered the laser light detection apparatus 86 is detected by the laser light detection apparatus 86.

Note that, if the second laser beam BM2 is not detected by the laser light detection apparatus 86, it is highly likely that the positional deviation of the second laser beam BM2, that is, the positional deviation of the first laser beam BM1 (laser beam BM) is large, and therefore the control apparatus may stop operation of the laser oscillator 5 and the robot arm 10. Furthermore, the control apparatus may cause an LED lamp or the like to emit a guide light traveling along the optical path (first optical path C1 to fourth optical path C4) of the laser beam BM in advance, instead of the laser beam BM, confirm that the guide light is detected by the laser light detection apparatus 86, and then cause the laser oscillator 5 to oscillate the laser beam BM. Furthermore, instead of the LED lamp or the like, the control apparatus may cause the laser oscillator 5 to oscillate a confirmation laser beam having a smaller output than the laser beam EM to be used for optical processing in advance.

When the first laser beam BM1 enters the diffractive optical element 83, a plurality of first laser beams BM1* split by diffraction are emitted from the diffractive optical element 83. The plurality of first laser beams BM1* emitted from the diffractive optical element 83 pass through the first collecting lens 84, become parallel to each other, and pass through the second collecting lens 85. The plurality of first laser beams BM1* having passed through the first collecting lens 84 and the second collecting lens 85 are radiated onto at least a part of the surface of the workpiece WK.

Note that laser interference structuring by the plurality of first laser beams BM1* focused on the surface of the workpiece WK makes it possible to form fine, periodic grooves (the grooves are also called riblets) like a shape of the surface of a shark's skin, on the surface of the workpiece WK (for laser interference structuring, see, for example, US Patent Application No. 16/756,497). In this way, the optical processing apparatus 1 according to the present embodiment is used as an optical processing apparatus for performing so-called riblet processing.

According to the present embodiment, the beam transmission optical system 30 comprises the first optical path changing section 31 and the second optical path changing section 41. The first optical path changing section 31 changes the traveling direction of the laser beam BM so that the laser beam BM heads toward the second optical path changing section 41 along the first optical path C1 lateral to the first arm section 11, based on rotation of the first arm section 11 around the fourth axis K4 through the first joint section 16. Thereby, the laser beam BM can be transmitted along the lateral side of the first arm section 11 regardless of the rotation of the first arm section 11. The second optical path changing section 41 changes the traveling direction of the laser beam BM having passed through the first optical path C1 so that the laser beam BM heads toward the third optical path changing section 51 along the second optical path C2 lateral to the second arm section 12, based on rotation of the second arm section 12 around the fifth axis K5 through the second joint section 17 and the rotation of the third arm section 13 around the second axis K2. Thereby, the laser beam BM can be transmitted along the lateral side of the second arm section 12 and the third arm section 13 regardless of the rotation of the second arm section 12 and the third arm section 13. Therefore, there is no need to provide an optical path for the laser beam BM inside the first arm section 11, the second arm section 12, and the third arm section 13, making it possible to increase the degree of freedom in handling the robot arm 10.

The optical axis of the first optical path C1 lateral to the first arm section 11 is parallel to the first axis K1. Thereby, the optical path length of the first optical path C1 can be minimized. Furthermore, the optical axis of the second optical path C2 lateral to the second arm section 12 intersects the second axis K2 depending on the rotational position of the third arm section 13. Thereby, the optical path length of the second optical path C2 can be minimized.

The first optical path changing section 31 comprises the first mirror 32 that is rotatable around the fourth axis K4 perpendicular to the first axis K1, and the second optical path changing section 41 comprises the second mirror 42 that is rotatable around the fifth axis K5 perpendicular to the second axis K2. As a result, the laser beam BM can be transmitted along the lateral sides of the first arm section 11 and the second arm section 12 without using an optical fiber, making it possible to increase the degree of freedom in handling the robot arm 10.

Note that the laser oscillator 5 oscillates the laser beam BM, the medium of which is carbon dioxide. As described above, since the laser beam EM is a laser beam with a CO₂ laser, the transmission efficiency is low when transmitted with an optical fiber (hollow optical fiber). Therefore, the first optical path changing section 31 comprising the first mirror 32 and the second optical path changing section 41 comprising the second mirror 42 allows the laser beam BM to be transmitted along the lateral sides of the first arm section 11 and the second arm section 12 without using an optical fiber, making it possible to increase the transmission efficiency of the laser beam BM.

When the first arm section 11 is rotated by α degrees around the fourth axis K4 by the first joint section 16, the first mirror 32 is rotated by α/2 degrees around the fourth axis K4. This allows the laser beam BM guided to the lateral side of the robot arm 10 (first joint section 16) to change the traveling direction with a simple configuration using rotation of the first mirror 32. When the second arm section 12 is rotated by β degrees around the fifth axis K5 by the second joint section 17, the second mirror 42 is rotated by β/2 degrees around the fifth axis K5. This allows the laser beam BM having passed through the first optical path C1 to change the traveling direction with a simple configuration using rotation of the second mirror 42.

Furthermore, the beam transmission optical system 30 comprises the third optical path changing section 51. The third optical path changing section 51 changes the traveling direction of the laser beam BM so that the laser beam BM having passed through the second optical path C2 heads toward the light guide section 61 along the third-A optical path C3a or the third-B optical path C3b, based on rotation of the fourth arm section 14 around the sixth axis K6 through the third joint section 18. Thereby, the laser beam BM can be transmitted along the lateral side of the fourth arm section 14 regardless of the rotation of the fourth arm section 14. Therefore, there is no need to provide an optical path for the laser beam BM inside the fourth arm section 14, making it possible to increase the degree of freedom in handling the robot arm 10.

The third optical path changing section 51 comprises the third-A mirror 52 and the third-B mirror 54 that are rotatable around the sixth axis K6 perpendicular to the third axis K3. Thereby, the laser beam BM can be transmitted along the lateral side of the fourth arm section 14 without using an optical fiber, making it possible to increase the degree of freedom in handling the robot arm 10.

When the fourth arm section 14 is rotated by γ degrees around the sixth axis K6 by the third joint section 18, the third-A mirror 52 and the third-B mirror 54 are rotated by γ/2 degrees around the sixth axis K6. This allows the laser beam BM having passed through the second optical path C2 to change the traveling direction with a simple configuration using rotation of the third-A mirror 52 and the third-B mirror 54.

Furthermore, the beam transmission optical system 30 comprises the light guide section 61 that guides the laser beam BM to the collecting optical system 81 of the optical processing head 80. Thereby, regardless of movement of the robot arm 10, the laser beam BM can be guided to the collecting optical system 81 of the optical processing head 80 by the light guide section 61.

Additionally, the optical processing apparatus 1 comprises the fourth optical path changing section 71. The fourth optical path changing section 71 changes the traveling direction of the laser beam BM, having passed through the fourth optical path C4, to the direction that intersects the seventh axis K7, and thereby guides the laser beam BM to the lateral side of the robot arm 10. This allows the beam transmission optical system 30 to transmit the laser beam BM along the lateral side of the robot arm 10. Therefore, there is no need to provide an optical path for the laser beam BM inside the robot arm 10, making it possible to increase the degree of freedom in handling the robot arm 10.

The fourth optical path C4 is located inside the base module 20, and the fourth optical path C4 and the seventh axis K7 are parallel. Furthermore, even if the robot arm 10 rotates around the seventh axis K7, the position of the fourth optical path C4 does not change. Thereby, regardless of the rotation of the robot arm 10 around the seventh axis K7, the laser beam BM having passed through the fourth optical path C4 can be guided to the lateral side of the robot arm 10.

The optical processing apparatus 1 also comprises the light splitting apparatus 82 that splits the laser beam BM into the first laser beam BM1 and the second laser beam BM2 different from the first laser beam BM1. The optical processing head 80 can irradiate the workpiece WK with the first laser beam BM1, and the laser light detection apparatus 86 can detect the second laser beam BM2. This makes it possible to determine the positional deviation of the first laser beam BM1 (laser beam BM) based on the position information of the second laser beam BM2 detected by the laser light detection apparatus 86. This makes it possible to correct the positional deviation of the first laser beam BM1, and to radiate the first laser beam BM1 to an accurate position in the workpiece WK.

In the optical processing apparatus 1 described above, the collecting optical system 81 of the optical processing head 80 comprises the position adjustment section 90, the light splitting apparatus 82, the diffractive optical element 83, the first collecting lens 84, and the second collecting lens 85, but is not limited to this, and does not need to comprise the diffractive optical element 83 and the first collecting lens 84. In this case, the first laser beam BM1 is adjusted by the position adjustment section 90 so that the positional deviation of the first laser beam BM1 is eliminated, and then passes through the second collecting lens 85. The first laser beam BM1 having passed through the second collecting lens 85 is radiated onto at least a part of the surface of the workpiece WK. In this case, a galvanometer mirror may be arranged between the second collecting lens 85 and the light splitting apparatus 82 or the position adjustment section 90, and in this case, the second collecting lens 85 may be an fθ lens.

Note that the first laser beam BM1 radiated onto the surface of the workpiece WK is capable of polishing the workpiece WK. In this case, the optical processing apparatus 1 according to the present embodiment is used as an optical processing apparatus for polishing. The first laser beam BM1 radiated onto the surface of the workpiece WK is also capable of cutting the workpiece WK. In this case, the optical processing apparatus 1 according to the present embodiment is used as an optical processing apparatus for cutting. The first laser beam BM1 radiated onto the surface of the workpiece WK is also capable of performing ablation for the workpiece WK. In this case, the optical processing apparatus 1 according to the present embodiment is used as an optical processing apparatus for performing ablation.

In addition, the first laser beam BM1 radiated to the surface of the workpiece WK is also capable of performing additive manufacturing for forming an object integral with the workpiece WK or an object separable from the workpiece WK through a laser overlay welding method (for the laser overlay welding method, see, for example, US Patent Application Publication No. 2017/304946). In this case, the optical processing apparatus 1 according to the present embodiment is used as an optical processing apparatus for performing additive manufacturing.

In the optical processing apparatus 1 described above, the robot arm 10 does not need to comprise the fourth arm section 14 and may be configured such that the optical processing head 80 is connected to the third arm section 13. Furthermore, the robot arm 10 does not need to comprise the third arm section 13 and the fourth arm section 14, and may be configured such that the optical processing head 80 is connected to the second arm section 12. In this case, the second optical path changing section may be configured to change the traveling direction of the laser beam BM having passed through the first optical path C1 so that the laser beam BM heads toward the optical processing head 80 along the second optical path C2.

In the optical processing apparatus 1 described above, the beam transmission optical system 30 comprises the first optical path changing section 31, the second optical path changing section 41, the third optical path changing section 51, and the light guide section 61, but is not limited to this, and just needs to be configured such that the laser beam EM is transmitted along the lateral side of the robot arm 10 toward the optical processing head 80. For example, the optical processing apparatus may be configured to comprise: the laser oscillator 5; the robot arm 10; the base module 20; the optical processing head 80; the fourth optical path changing section 71; and the beam transmission optical system that transmits the laser beam BM, guided by the fourth optical path changing section 71, toward the optical processing head 80 along the lateral side of the robot arm 10, in which at least a part of the fourth optical path C4 is located inside the base module 20, and the fourth optical path C4 is parallel to the seventh axis K7.

In the optical processing apparatus 1 described above, the beam transmission optical system 30 does not need to comprise the first optical path changing section 31. For example, the optical processing apparatus may be configured to comprise: the laser oscillator 5; the robot arm 10; the beam transmission optical system that is attached to the robot arm 10 and transmits the laser beam BM; and the optical processing head 80, in which the robot arm 10 includes the first arm section 11 and the second arm section 12, and the beam transmission optical system includes the second optical path changing section that changes the direction of the laser beam BM so as to follow the second optical path C2 lateral to the second arm section 12 based on rotation of the second arm section 12. In this case, the second optical path changing section may be configured to change the direction of the laser beam EM guided by the fourth optical path changing section 71 so as to follow the second optical path C2 lateral to the second arm section 12, based on rotation of the second arm section 12.

In the optical processing apparatus 1 described above, the robot arm 10 does not need to comprise the first arm section 11, and the beam transmission optical system 30 does not need to comprise the first optical path changing section 31. For example, the optical processing apparatus may be configured to comprise: the laser oscillator 5; the robot arm; the beam transmission optical system that is attached to the robot arm and transmits the laser beam BM; and the optical processing head 80, in which the robot arm includes the second arm section 12 and the third arm section 13, and the beam transmission optical system includes the second optical path changing section that changes the direction of the laser beam BM so as to follow the second optical path C2 lateral to the second arm section 12 based on rotation of the third arm section 13 around the second axis K2. In this case, the second arm section 12 may be configured to be connected to the base module 20 (arm support section 22). The second optical path changing section may be configured to change the direction of the laser beam EM guided by the fourth optical path changing section 71 so as to follow the second optical path C2 lateral to the second arm section 12 based on rotation of the third arm section 13 around the second axis K2.

The optical processing apparatus 1 described above comprises: the robot arm 10 including the first arm section 11, the second arm section 12, the third arm section 13, and the fourth arm section 14; and the beam transmission optical system 30 including the first optical path changing section 31, the second optical path changing section 41, the third optical path changing section 51, and the light guide section 61, but is not limited to this. For example, the optical processing apparatus may be configured to comprise the laser oscillator 5, the robot arm, the base module 20, the beam transmission optical system that is attached to the robot arm and transmits the laser beam EM, the optical processing head 80, and the fourth optical path changing section that guides the laser beam BM to the lateral side of the robot arm.

In the optical processing apparatus 1 described above, the laser oscillator 5 is configured to oscillate the laser beam BM with a CO₂ laser, including laser light with a wavelength of 9.6 µm or 10.6 µm, but is not limited to this. For example, the laser oscillator may be configured to oscillate a laser beam with a CO laser, including laser light with a wavelength of 5.5 µm.

Furthermore, for example, the laser oscillator may be configured to oscillate a laser beam with an extremely short pulse laser in which the width (time width) of one pulse is several picoseconds. Note that, in this case, this laser oscillator may be applied to a laser beam including a laser light with a wavelength of 350 nm, 1 µm, 2 µm, etc., in which the output of the laser oscillator exceeds 1 kW.

For example, instead of the far infrared region from 9.2 µm to 11.4 µm, a laser light source may also be used that emits a laser beam including at least a part of the wavelength range from the visible region to the near-infrared region. In this case, the light-transmitting member arranged in the optical path of the laser beam (for example, a collecting lens, a parallel flat plate, wedge prism) can be formed with optical materials such as optical glass, quartz glass, or fluorite that transmit laser light in the wavelength range from the visible region to the near-infrared region, instead of optical materials such as zinc selenide and germanium.

In the optical processing apparatus 1 described above, each surface of the third-A mirror 52 may be provided with a reflective surface that reflects the laser beam BM. For example, there may be a configuration such that: in the case shown in FIG. 1, the laser beam BM having passed through the second optical path C2 is reflected by one reflective surface of the third-A mirror 52; and in the case in which the fourth arm section 14 rotates around the sixth axis K6 from the state shown in FIG. 1 so that the optical processing head 80 faces upward, the laser beam BM having passed through the second optical path C2 is reflected by the other reflective surface of the third-A mirror 52. Furthermore, each surface of the third-B mirror 54 may be provided with a reflective surface that reflects the laser beam BM. For example, there may be a configuration such that: in the case shown in FIG. 4, the laser beam BM having passed through the second optical path C2 is reflected by one reflective surface of the third-B mirror 54; and in the case in which the fourth arm section 14 rotates around the sixth axis K6 from the state shown in FIG. 4 so that optical processing head 80 faces downward, the laser beam BM having passed through the second optical path C2 is reflected by the other reflective surface of the third-B mirror 54.

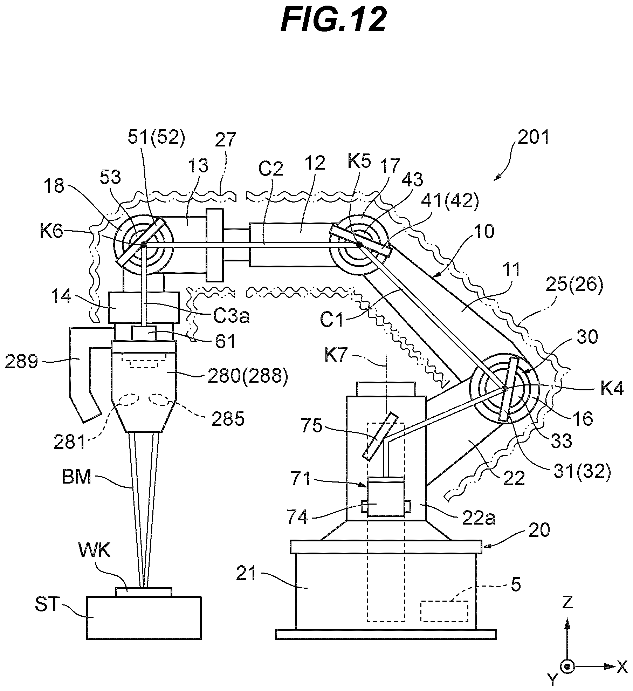

In addition, the optical processing apparatus 1 has been described as an apparatus in which the beam transmission optical system 30 is attached to the robot arm 10, but the apparatus is not limited to the optical processing apparatus 1 and may be an optical measurement apparatus. Therefore, an optical measurement apparatus 201 according to the present embodiment will be explained using FIG. 12. The optical measurement apparatus 201 according to the present embodiment has the same configuration as the aforementioned optical processing apparatus 1 except that it comprises an optical measurement head 280 instead of the optical processing head 80, so the same reference numerals and characters are given to the same components as those in the optical processing apparatus 1, and detailed description thereof will be omitted. FIG. 12 is a diagram of the optical measurement apparatus 201 viewed from the +Y direction side, and shows a state in which the optical measurement head 280 faces the -Z direction. The optical measurement apparatus 201 comprises the laser oscillator 5, the robot arm 10, the base module 20, the beam transmission optical system 30, and the optical measurement head 280. Furthermore, the fourth optical path changing section 71 is attached to the base module 20.

The laser oscillator 5 has the same configuration as the laser oscillator 5 of the optical processing apparatus 1, but is not limited to this. The laser oscillator 5 may be configured to oscillate a laser beam including laser light with a wavelength in the visible region or a laser beam including laser light with a wavelength in the ultraviolet region, instead of the laser beam EM including laser light with a wavelength in the far infrared region.

The robot arm 10 comprises the first arm section 11, the second arm section 12, the third arm section 13, the fourth arm section 14, the first joint section 16, the second joint section 17, and the third joint section 18. The optical measurement head 280 is connected to the head end side of the fourth arm section 14.

The beam transmission optical system 30 comprises the first optical path changing section 31, the second optical path changing section 41, the third optical path changing section 51, and the light guide section 61. The light guide section 61 is arranged between the fourth arm section 14 of the robot arm 10 and the optical measurement head 280. The light guide section 61 guides the laser beam BM, having passed through the third-A optical path C3a or the third-B optical path C3b, to the optical measurement head 280. For the robot arm 10 to which the beam transmission optical system 30 is attached, it is preferable to attach the cover module 25 capable of covering the lateral side of the robot arm 10 including the optical paths of the laser beam EM (first optical path C1 to third optical path C3). Note that, between the arm support section 22 and the first arm section 11, the cover module 25 may be configured to cover a part of the lateral side of the robot arm 10, which part is the vicinity of the first optical path C1. Furthermore, between the second arm section 12 and the optical measurement head 280, the cover module 25 may be configured to cover the lateral side of the entire circumference of the second arm section 12, the third arm section 13, and the fourth arm section 14.

The optical measurement head 280 irradiates the workpiece WK placed at a predetermined position (for example, the upper surface of the stage ST (see FIG. 12), or a part of a large structure) with the laser beam EM transmitted by the beam transmission optical system 30. The optical measurement head 280 comprises: a collecting optical system 281 that the laser beam BM, guided by the light guide section 61 of the beam transmission optical system 30, enters; a detection optical system 285 that the light, emitted from the workpiece WK enters; and a lens barrel section 288 that houses and holds the collecting optical system 281 and the detection optical system 285. The lens barrel section 288 of the optical measurement head 280 comprises a three-dimensional camera 289, attached thereto, that creates a 3D vision with which the workpiece WK can be recognized three-dimensionally.

The collecting optical system 281 irradiates the workpiece WK with the laser beam BM having entered the collecting optical system 281 from the light guide section 61. The detection optical system 285 guides light from the workpiece WK that has entered the detection optical system 285 (for example, reflected light or diffracted light from the workpiece WK) to a measurement light detection apparatus (not shown) disposed inside the lens barrel section 288. The measurement light detection apparatus is configured with, for example, an image sensor (two-dimensional sensor). The measurement light detection apparatus detects light from the workpiece WK guided by the detection optical system 285.

In the optical measurement apparatus 201 configured as described above, like the aforementioned optical processing apparatus 1, the beam transmission optical system 30 transmits the laser beam BM guided by the fourth optical path changing section 71 toward the optical measurement head 280 along the lateral side of the robot arm 10. The laser beam BM guided by the light guide section 61 of the beam transmission optical system 30 enters the collecting optical system 281 of the optical measurement head 280. The laser beam BM, which has entered the collecting optical system 281, passes through the collecting optical system 281 and is radiated onto at least a part of the surface of the workpiece WK. Light emitted from the workpiece WK by reflection or diffraction of the laser beam BM on the surface of the workpiece WK enters the detection optical system 285. Light from the workpiece WK that has entered the detection optical system 285 passes through the detection optical system 285 and is guided to a measurement light detection apparatus (not shown). The measurement light detection apparatus detects light from the workpiece WK guided by the detection optical system 285, and outputs detection information to a processing apparatus (not shown). The processing apparatus determines, for example, the distance between the optical measurement head 280 and the workpiece WK, and the surface shape (three-dimensional shape) of the workpiece WK, based on the light detection information input from the measurement light detection apparatus.

The optical measurement apparatus 201 according to the present embodiment can provide the same effects as those in the aforementioned optical processing apparatus 1.

In the optical measurement apparatus 201 described above, the collecting optical system 281 may comprise a position adjustment section, a light splitting apparatus, and a collecting lens, though the detailed illustration is omitted. The light splitting apparatus may be configured in the same way as the light splitting apparatus 82 of the aforementioned optical processing apparatus 1. The position adjustment section may be configured in the same way as the position adjustment section 90 (or position adjustment section 190) of the aforementioned optical processing apparatus 1. In this case, the laser beam BM guided by the light guide section 61 of the beam transmission optical system 30 enters the light splitting apparatus through the position adjustment section. A part of the laser beam BM having entered the light splitting apparatus passes through the light splitting apparatus. The laser beam having passed through the light splitting apparatus is adjusted by the position adjustment section so that the positional deviation of the laser beam is eliminated, and then enters the collecting lens. The laser beam having entered the collecting lens passes through the collecting lens, and is radiated onto at least a part of the surface of the workpiece WK. In contrast, the remaining part of the laser beam BM having entered the light splitting apparatus is reflected by the light splitting apparatus and enters a laser light detection apparatus (not shown) disposed inside the lens barrel section 288. The laser beam having entered the laser light detection apparatus is detected by the laser light detection apparatus. Note that the laser light detection apparatus may be configured in the same way as the laser light detection apparatus 86 of the aforementioned optical processing apparatus 1. Furthermore, in this case, a galvanometer mirror may be arranged between the collecting lens and the light splitting apparatus or the position adjustment section, and in this case, the collecting lens may be an fθ lens.

In the optical measurement apparatus 201 described above, the optical measurement head 280 comprises the collecting optical system 281 and the detection optical system 285 that is separate from the collecting optical system 281, but is not limited to this, and may be configured such that the optical elements (optical axis) on the workpiece WK side are common in the collecting optical system and the detection optical system. For example, there may be a configuration such that: the collecting optical system comprises a position adjustment section, a light splitting apparatus, a half mirror, and a collecting lens; and the detection optical system comprises the collecting lens, the half mirror and a light guide mirror. The light splitting apparatus may be configured in the same way as the light splitting apparatus 82 of the aforementioned optical processing apparatus 1. The position adjustment section may be configured in the same way as the position adjustment section 90 (or position adjustment section 190) of the aforementioned optical processing apparatus 1.

In this case, the laser beam BM guided by the light guide section 61 of the beam transmission optical system 30 enters the light splitting apparatus through the position adjustment section. A part of the laser beam BM having entered the light splitting apparatus passes through the light splitting apparatus. The laser beam having passed through the light splitting apparatus is adjusted by the position adjustment section so that the positional deviation of the laser beam is eliminated, and then enters the half mirror. In contrast, the remaining part of the laser beam BM having entered the light splitting apparatus is reflected by the light splitting apparatus and enters a laser light detection apparatus (not shown) disposed inside the lens barrel section 288. The laser beam having entered the laser light detection apparatus is detected by the laser light detection apparatus. A part of the laser beam from the light splitting apparatus that have entered the half mirror passes through the half mirror and enters the collecting lens. The laser beam having entered the collecting lens passes through the collecting lens, and is radiated onto at least a part of the surface of the workpiece WK. The light emitted from the workpiece WK by reflection or diffraction of the laser beam BM on the surface of the workpiece WK passes through the collecting lens and enters the half mirror. A part of the light from the workpiece WK that has entered the half mirror is reflected by the half mirror. The light reflected by the half mirror is reflected by the light guide mirror of the detection optical system, and is guided to a measurement light detection apparatus (not shown). The measurement light detection apparatus detects light from the workpiece WK guided by the light guide mirror of the detection optical system, and outputs detection information to a processing apparatus (not shown). Note that the laser light detection apparatus may be configured in the same way as the laser light detection apparatus 86 of the aforementioned optical processing apparatus 1.

In the optical measurement apparatus 201 described above, the robot arm 10 does not need to comprise the fourth arm section 14 and may be configured such that the optical measurement head 280 is connected to the third arm section 13. Furthermore, the robot arm 10 does not need to comprise the third arm section 13 and the fourth arm section 14, and may be configured such that the optical measurement head 280 is connected to the second arm section 12. In this case, the second optical path changing section may be configured to change the traveling direction of the laser beam BM having passed through the first optical path C1 so that the laser beam BM heads toward the optical measurement head 280 along the second optical path C2.

In the optical measurement apparatus 201 described above, the beam transmission optical system 30 comprises the first optical path changing section 31, the second optical path changing section 41, the third optical path changing section 51, and the light guide section 61, but is not limited to this, and just needs to be configured such that the laser beam EM is transmitted along the lateral side of the robot arm 10 toward the optical measurement head 280. For example, the optical measurement apparatus may be configured to comprise the laser oscillator 5, the robot arm 10, the base module 20, the optical measurement head 280, the fourth optical path changing section 71, and the beam transmission optical system that transmits the laser beam BM guided by the fourth optical path changing section 71 along the lateral side of the robot arm 10 toward the optical measurement head 280, in which at least a part of the fourth optical path C4 is located inside the base module 20, and the fourth optical path C4 and the seventh axis K7 are parallel.

In the optical measurement apparatus 201 described above, the beam transmission optical system 30 does not need to comprise the first optical path changing section 31. For example, the optical measurement apparatus may be configured to comprise: the laser oscillator 5; the robot arm 10; the beam transmission optical system that is attached to the robot arm 10 and transmits the laser beam BM; and the optical measurement head 280, in which the robot arm 10 includes the first arm section 11 and the second arm section 12, and the beam transmission optical system includes the second optical path changing section that changes the direction of the laser beam BM so as to follow the second optical path C2 lateral to the second arm section 12 based on rotation of the second arm section 12. In this case, the second optical path changing section may be configured to change the direction of the laser beam EM guided by the fourth optical path changing section 71 so as to follow the second optical path C2 lateral to the second arm section 12, based on rotation of the second arm section 12.

In the optical measurement apparatus 201 described above, the robot arm 10 does not need to comprise the first arm section 11, and the beam transmission optical system 30 does not need to comprise the first optical path changing section 31. For example, the optical measurement apparatus may be configured to comprise: the laser oscillator 5; the robot arm; the beam transmission optical system that is attached to the robot arm and transmits the laser beam BM; and the optical measurement head 280, in which the robot arm includes the second arm section 12 and the third arm section 13, and the beam transmission optical system includes the second optical path changing section that changes the direction of the laser beam BM so as to follow the second optical path C2 lateral to the second arm section 12 based on rotation of the third arm section 13 around the second axis K2. In this case, the second arm section 12 may be configured to be connected to the base module 20 (arm support section 22). The second optical path changing section may be configured to change the direction of the laser beam EM guided by the fourth optical path changing section 71 so as to follow the second optical path C2 lateral to the second arm section 12 based on rotation of the third arm section 13 around the second axis K2.

The optical measurement apparatus 201 described above comprises: the robot arm 10 including the first arm section 11, the second arm section 12, the third arm section 13, and the fourth arm section 14; and the beam transmission optical system 30 including the first optical path changing section 31, the second optical path changing section 41, the third optical path changing section 51, and the light guide section 61, but is not limited to this. For example, the optical measurement apparatus may be configured to comprise the laser oscillator 5, the robot arm, the base module 20, the beam transmission optical system that is attached to the robot arm and transmits the laser beam BM, the optical measurement head 280, and the fourth optical path changing section that guides the laser beam BM to the lateral side of the robot arm.

In the optical measurement apparatus 201 described above, like the case of the aforementioned optical processing apparatus 1, a reflective surface that reflects the laser beam BM may be provided on each surface of the third-A mirror 52. Furthermore, like the case of the aforementioned optical processing apparatus 1, each surface of the third-B mirror 54 may be provided with a reflective surface that reflects the laser beam BM.

In the optical processing apparatus 1 and the optical measurement apparatus 201 described above, the laser oscillator 5 is provided inside the base section 21 of the base module 20, but is not limited to this, and may be provided outside the base module 20. In this case, there may be a configuration such that: a part of the fourth optical path C4 is located inside the base module 20; and the other part of the fourth optical path C4 is located outside the base module 20. Furthermore, there may be a configuration such that: a part of the fourth optical path C4 is parallel to the seventh axis K7; and the other part of the fourth optical path C4 is not parallel to the seventh axis K7. Furthermore, the laser oscillator 5 does not need to be comprised in the optical processing apparatus 1 and the optical measurement apparatus 201, and may be provided separately from the optical processing apparatus 1 and the optical measurement apparatus 201. In this case, a laser beam from a laser oscillator provided separately from the optical processing apparatus 1 and the optical measurement apparatus 201 may be transmitted so as to intersect the seventh axis K7, which is the rotation axis.

In the above-described optical processing apparatus 1 and optical measurement apparatus 201, the fourth optical path changing section 71 is configured to comprise the internal mirror 73, the first external mirror 74, and the second external mirror 75, but is not limited to this. For example, the fourth optical path changing section may be configured to comprise the internal mirror 73 and one external mirror. In this case, the external mirror may be arranged at the same position as the aforementioned first external mirror 74 in a different direction from the first external mirror 74, and may reflect the laser beam BM from the internal mirror 73 toward the lateral side on the one side of the first joint section 16 of the robot arm 10.

In the above-described optical processing apparatus 1 and optical measurement apparatus 201, the fourth arm section 14 is rotatably supported by the third joint section 18, but is not limited to this. For example, the fourth arm section 14 may be configured to be fixed to the third arm section 13 without providing the third joint section 18.

In the above-described optical processing apparatus 1 and optical measurement apparatus 201, at least one mirror drive section of the first mirror drive section 33, the second mirror drive section 43, the third-A mirror drive section 53, and the third-B mirror drive section 55 is not limited to an actuator, and may be configured with a gear mechanism linked to the rotation of the arm section by the joint section. For example, the first mirror drive section 33 may be configured with a gear mechanism that rotates the first mirror 32 by α/2 degrees around the fourth axis K4 in link with rotation of the first arm section 11 by α degrees around the fourth axis K4 through the first joint section 16. The second mirror drive section 43 may be configured with a gear mechanism that rotates the second mirror 42 by β/2 degrees around the fifth axis K5 in link with rotation of the second arm section 12 by β degrees around the fifth axis K5 through the second joint section 17. The third-A mirror drive section 53 and the third-B mirror drive section 55 may be configured with a gear mechanism that rotates the third-A mirror 52 and the third-B mirror 54 by y/2 degrees around the sixth axis K6 in link with rotation of the fourth arm section 14 by γ degrees around the sixth axis K6 through the third joint section 18. Furthermore, at least one mirror drive section of the first mirror drive section 33, the second mirror drive section 43, the third-A mirror drive section 53, and the third-B mirror drive section 55 may be controlled in response to drive command signals to the robot arm 10.

In the above-described optical processing apparatus 1 and optical measurement apparatus 201, the triangular prism 64 of the light guide section 61 is configured to be movable between the aforementioned first reflection position and second reflection position by the triangular prism drive section 65, but is not limited to this. For example, the triangular prism 64 may be configured to be fixed at an intermediate position between the first light guide mirror 62 and the second light guide mirror 63, in which the laser beam BM reflected by the first reflective surface 64a of the triangular prism 64 enters the collecting optical system 81, 281 of the optical processing head 80 or the optical measurement head 280, and the laser beam BM reflected by the second reflective surface 64b of the triangular prism 64 enters the collecting optical system 81, 281 of the optical processing head 80 or the optical measurement head 280. In this case, the position adjustment section of the collecting optical system 81, 281 may adjust the laser beam EM so as to eliminate positional deviation in the direction perpendicular to the optical axis of the collecting optical system 81, 281.

In the above-described optical processing apparatus 1 and optical measurement apparatus 201, a relay optical system capable of correcting the beam diameter (astigmatism) of the laser beam EM may be provided in the first optical path C1 lateral to the first arm section 11. In addition, a relay optical system capable of correcting the beam diameter (astigmatism) of the laser beam BM may be provided in the third-A optical path C3a and the third-B optical path C3b, each lateral to the fourth arm section 14.

In the above-described optical processing apparatus 1 and optical measurement apparatus 201, the cover module 25 is configured to comprise the first bellows section 26 and the second bellows section 27, which are deformable, but is not limited to this. For example, the cover module may be configured to comprise a solid semi-cylindrical first cover section that covers the lateral side of the first arm section 11, a solid semi-cylindrical second cover section that covers the lateral side of the second arm section 12, a solid cylindrical third cover section that covers the lateral side of the third arm section 13, and a solid semi-cylindrical fourth cover section that cover the lateral side of the fourth arm section 14. The cover module may be configured to further comprise: a deformable first joint bellows section that is connected to the base end side (base module 20 side) of the first cover section, and covers the lateral side of the first joint section 16; a deformable second joint bellows section connected between the first cover section and the second cover section, and covers the lateral side of the second joint section 17; and a deformable third joint bellows section connected between the third cover section and the fourth cover section, and covers the lateral side of the third joint section 18.

For example, the cover module may be configured to comprise a first mirror cover section that covers the surroundings of the first mirror 32, a second mirror cover section that covers the surroundings of the second mirror 42, a third-A mirror cover section that covers the surroundings of the third-A mirror 52, and a third-B mirror cover section that covers the surroundings of the third-B mirror 54. In this case, each mirror cover section of the cover module may be configured to prevent the laser beam EM reflected by each mirror from traveling in a direction other than a specific direction and being radiated to an unintended location.

In the above-described optical processing apparatus 1 and optical measurement apparatus 201, the optical processing apparatus 1 and the optical measurement apparatus 201 may be configured in combination. In this case, the optical path from the light source (laser oscillator) of each apparatus to the optical processing measurement head (a head in which the optical processing head and the optical measurement head are integrated) may be an optical path shared by the processing laser beam and the measurement laser beam, or may have separate optical paths.

Furthermore, according to the embodiment described above, there can be configurations described in the following supplements.

### <Supplement 1>

An optical measurement apparatus comprising:
a laser oscillator that oscillates a laser beam;
a robot arm;
a beam transmission optical system that is attached to the robot arm and transmits the laser beam; and
an optical measurement head that is attached to the robot arm and irradiates a workpiece with the laser beam, wherein
the robot arm includes:
   a first arm section that extends in a direction of a first axis;
   a first joint section that supports the first arm section so as to be rotatable around an axis perpendicular to the first axis;
   a second arm section that is located on a side of the optical measurement head with respect to the first arm section and extends in a direction of a second axis;
   a second joint section that supports the second arm section so as to be rotatable around an axis perpendicular to the second axis with respect to the first arm section; and
   a third arm section that is located on a side of the optical measurement head with respect to the second arm section and is rotatable around the second axis, and
the beam transmission optical system includes:
   a first optical path changing section that changes a traveling direction of the laser beam so that the laser beam follows a first optical path lateral to the first arm section, based on rotation of the first arm section around the axis perpendicular to the first axis through the first joint section; and
   a second optical path changing section that changes a traveling direction of the laser beam having passed through the first optical path so that the laser beam follows a second optical path lateral to the second arm section, based on rotation of the second arm section around the axis perpendicular to the second axis through the second joint section and rotation of the third arm section around the second axis.

### <Supplement 2>

An optical measurement apparatus, comprising:
a laser oscillator that oscillates a laser beam;
a robot arm;
a base module that supports the robot arm so as to be rotatable around a seventh axis;
an optical measurement head that irradiates a workpiece with the laser beam;
a fourth optical path changing section that changes a traveling direction of the laser beam to a direction intersecting the seventh axis, and thereby guides the laser beam to a lateral side of the robot arm; and
a beam transmission optical system that transmits the laser beam, guided by the fourth optical path changing section, toward the optical measurement head along a lateral side of the robot arm, wherein
at least a part of the fourth optical path is located inside the base module, and
the fourth optical path and the seventh axis are parallel.

### <Supplement 3>

An optical measurement apparatus comprising:
a laser oscillator that oscillates a laser beam;
a robot arm;
a beam transmission optical system that is attached to the robot arm and transmits the laser beam; and
an optical measurement head that irradiates a workpiece with the laser beam, wherein
the robot arm includes:
   a first arm section; and
   a second arm section located on a side of the optical measurement head with respect to the first arm section, and
the beam transmission optical system includes a second optical path changing section that changes a direction of the laser beam so as to follow a second optical path lateral to the second arm section, based on rotation of the second arm section.

### <Supplement 4>

An optical measurement apparatus comprising:
a laser oscillator that oscillates a laser beam;
a robot arm;
a beam transmission optical system that is attached to the robot arm and transmits the laser beam; and
an optical measurement head that irradiates a workpiece with the laser beam, wherein
the robot arm includes:
   a second arm section that extends in a direction of a second axis;
   a third arm section that is located on a side of the optical measurement head with respect to the second arm section and is rotatable around the second axis, and
the beam transmission optical system includes a second optical path changing section that changes a direction of the laser beam so as to follow a second optical path lateral to the second arm section, based on rotation of the third arm section around the second axis.

### <Supplement 5>

An optical measurement apparatus comprising:
a laser oscillator that oscillates a laser beam;
a robot arm;
a base module that rotatably supports the robot arm;
a beam transmission optical system that is attached to the robot arm and transmits the laser beam; and
an optical measurement head that irradiates a workpiece with the laser beam; and
a fourth optical path changing section that guides the laser beam to a lateral side of the robot arm.

### <Supplement 6>

A beam transmission optical system that is attached to a robot arm and transmits a laser beam, the robot arm including a first arm section and a second arm section rotatable with respect to the first arm section,
the beam transmission optical system comprising a second optical path changing section that changes a direction of the laser beam so as to follow a second optical path lateral to the second arm section based on rotation of the second arm section.

### <Supplement 7>

A beam transmission optical system that is attached to a robot arm and transmits a laser beam, the robot arm including a second arm section and a third arm section, the second arm section extending in a direction of a second axis, a third arm section being located on a side of the optical processing head with respect to the second arm section and being rotatable around the second axis,
the beam transmission optical system comprising a second optical path changing section, the second optical path changing section changing a direction of the laser beam so as to follow a second optical path lateral to the second arm section based on rotation of the third arm section around the second axis.

**EXPLANATION OF NUMERALS AND CHARACTERS**

| | | | |
|---|---|---|---|
| 1. | optical processing apparatus | | |
| 5 | laser oscillator | | |
| 10 | robot arm | | |
| 11 | first arm section | 12 | second arm section |
| 13 | third arm section | 14 | fourth arm section |
| 16 | first joint section | 17 | second joint section |
| 18 | third joint section | | |
| 20 | base module | | |
| 25 | cover module | | |
| 26 | first bellows section | 27 | second bellows section |
| 30 | beam transmission optical system | | |
| 31 | first optical path changing section | 32 | first mirror |
| 41 | second optical path changing section | 42 | second mirror |
| 51 | third optical path changing section | | |
| 52 | third-A mirror | 53 | third-B mirror |
| 61 | light guide section | | |
| 71 | fourth optical path changing section | | |
| 80 | optical processing head | 81 | collecting optical system |
| 82 | light splitting apparatus | | |
| 86 | laser light detection apparatus | | |
| 201 | optical measurement apparatus | | |
| 280 | optical measurement head | 281 | collecting optical system |
| WK | workpiece | | |
| BM | laser beam | | |
| BM1 | first laser beam | BM2 | second laser beam |
| C1 | first optical path | C2 | second optical path |
| C3a | third-A optical path | C3b | third-B optical path |
| C4 | fourth optical path | | |
| K1 | first axis | K2 | second axis |
| K3 | third axis | K4 | fourth axis |
| K5 | fifth axis | K6 | sixth axis |
| K7 | seventh axis | | |

## Claims

1. An optical processing apparatus comprising:
a laser oscillator that oscillates a laser beam;
a robot arm;
a beam transmission optical system that is attached to the robot arm and transmits the laser beam; and
an optical processing head that is attached to the robot arm and irradiates a workpiece with the laser beam, wherein
the robot arm includes:
a first arm section that extends in a direction of a first axis;
a first joint section that supports the first arm section so as to be rotatable around an axis perpendicular to the first axis;
a second arm section that is located on a side of the optical processing head with respect to the first arm section and extends in a direction of a second axis;
a second joint section that supports the second arm section so as to be rotatable around an axis perpendicular to the second axis with respect to the first arm section; and
a third arm section that is located on a side of the optical processing head with respect to the second arm section and is rotatable around the second axis, and
the beam transmission optical system includes:
a first optical path changing section that changes a traveling direction of the laser beam so that the laser beam follows a first optical path lateral to the first arm section, based on rotation of the first arm section around the axis perpendicular to the first axis through the first joint section; and
a second optical path changing section that changes a traveling direction of the laser beam having passed through the first optical path so that the laser beam follows a second optical path lateral to the second arm section, based on rotation of the second arm section around the axis perpendicular to the second axis through the second joint section and rotation of the third arm section around the second axis.

2. The optical processing apparatus according to claim 1, wherein an optical axis of the first optical path is parallel to the first axis, and an optical axis of the second optical path intersects the second axis.

3. The optical processing apparatus according to claim 1 or 2, wherein
the robot arm further comprises a fourth arm section that is located on a side of the optical processing head with respect to the third arm section, extends in a direction of a third axis, and is connectable to the optical processing head, and
the beam transmission optical system further comprises a third optical path changing section that changes a traveling direction of the laser beam so that the laser beam having passed through the second optical path heads toward the optical processing head along a third optical path.

4. The optical processing apparatus according to claim 3, wherein the second optical path changing section is capable of changing a traveling direction of the laser beam so that the laser beam heads toward the third optical path changing section.

5. The optical processing apparatus according to claim 3 or 4, wherein the robot arm further comprises a third joint section that rotatably supports the fourth arm section.

6. The optical processing apparatus according to claim 5, wherein
the third optical path changing section comprises a third mirror rotatable around a sixth axis perpendicular to the third axis, and
the third mirror is rotated by γ/2 degrees around the sixth axis when the fourth arm section is rotated by γ degrees around the sixth axis by the third joint section.

7. The optical processing apparatus according to claim 1 or 2, wherein
the third arm section is connectable to the optical processing head, and
the second optical path changing section changes a traveling direction of the laser beam having passed through the first optical path so that the laser beam heads toward the optical processing head along the second optical path.

8. The optical processing apparatus according to any one of claims 1 to 7, wherein
the first optical path changing section comprises a first mirror rotatable around a fourth axis perpendicular to the first axis, and
the second optical path changing section comprises a second mirror rotatable around a fifth axis perpendicular to the second axis.

9. The optical processing apparatus according to claim 8, wherein
the first mirror is rotated by α/2 degrees around the fourth axis when the first arm section is rotated by α degrees around the fourth axis by the first joint section, and
the second mirror is rotated by β/2 degrees around the fifth axis when the second arm section is rotated by β degrees around the fifth axis by the second joint section.

10. The optical processing apparatus according to any one of claims 1 to 9, wherein the optical processing head comprises a collecting optical system that the laser beam enters.

11. The optical processing apparatus according to claim 10, wherein the beam transmission optical system further comprises a light guide section that guides the laser beam to the collecting optical system.

12. The optical processing apparatus according to any one of claims 3 to 6, wherein the optical processing head comprises a collecting optical system that the laser beam enters.

13. The optical processing apparatus according to claim 12, wherein the beam transmission optical system further comprises a light guide section that guides the laser beam having passed through the third optical path to the collecting optical system.

14. The optical processing apparatus according to any one of claims 1 to 13, further comprising:
a base module that supports the robot arm so as to be rotatable around a seventh axis; and
a fourth optical path changing section that changes a traveling direction of the laser beam having passed through a fourth optical path to a direction intersecting the seventh axis, and thereby guides the laser beam to a lateral side of the robot arm.

15. The optical processing apparatus according to claim 14, wherein at least a part of the fourth optical path is located inside the base module.

16. The optical processing apparatus according to claim 14 or 15, wherein
at least a part of the fourth optical path is parallel to the seventh axis, and
a position of the fourth optical path does not change even if the robot arm rotates around the seventh axis.

17. The optical processing apparatus according to any one of claims 1 to 16, wherein the laser beam includes laser light with a wavelength of 9.2 µm to 11.4 µm.

18. The optical processing apparatus according to any one of claims 1 to 17, wherein the laser beam includes laser light with a wavelength of 9.6 µm or 10.6 µm.

19. The optical processing apparatus according to any one of claims 1 to 18, wherein the laser beam is a laser beam, a medium of which is carbon dioxide.

20. The optical processing apparatus according to any one of claims 1 to 19, further comprising a cover module that is disposed on a lateral side of the robot arm and covers an optical path of the laser beam.

21. The optical processing apparatus according to claim 20, wherein the cover module comprises a bellows section.

22. The optical processing apparatus according to claim 20 or 21, wherein a shape of the cover module is variable according to movement of the robot arm.

23. The optical processing apparatus according to any one of claims 1 to 22, further comprising a light detection apparatus capable of detecting the laser beam.

24. The optical processing apparatus according to claim 23, further comprising a light splitting apparatus that splits the laser beam into a first laser beam and a second laser beam different from the first laser beam, wherein
the optical processing head is capable of irradiating the workpiece with the first laser beam, and
the light detection apparatus is capable of detecting the second laser beam.

25. An optical processing apparatus, comprising:
a laser oscillator that oscillates a laser beam;
a robot arm;
a base module that supports the robot arm so as to be rotatable around a seventh axis;
an optical processing head that irradiates a workpiece with the laser beam;
a fourth optical path changing section that changes a traveling direction of the laser beam to a direction intersecting the seventh axis, and thereby guides the laser beam to a lateral side of the robot arm; and
a beam transmission optical system that transmits the laser beam, guided by the fourth optical path changing section, toward the optical processing head along a lateral side of the robot arm, wherein
at least a part of the fourth optical path is located inside the base module, and
the fourth optical path and the seventh axis are parallel.

26. An optical processing apparatus comprising:
a laser oscillator that oscillates a laser beam;
a robot arm;
a beam transmission optical system that is attached to the robot arm and transmits the laser beam; and
an optical processing head that irradiates a workpiece with the laser beam, wherein
the robot arm includes:
a first arm section; and
a second arm section located on a side of the optical processing head with respect to the first arm section, and
the beam transmission optical system includes a second optical path changing section that changes a direction of the laser beam so as to follow a second optical path lateral to the second arm section, based on rotation of the second arm section.

27. An optical processing apparatus comprising:
a laser oscillator that oscillates a laser beam;
a robot arm;
a beam transmission optical system that is attached to the robot arm and transmits the laser beam; and
an optical processing head that irradiates a workpiece with the laser beam, wherein
the robot arm includes:
a second arm section that extends in a direction of a second axis; and
a third arm section that is located on a side of the optical processing head with respect to the second arm section and is rotatable around the second axis, and
the beam transmission optical system includes a second optical path changing section that changes a direction of the laser beam so as to follow a second optical path lateral to the second arm section, based on rotation of the third arm section around the second axis.

28. An optical processing apparatus comprising:
a laser oscillator that oscillates a laser beam;
a robot arm;
a base module that rotatably supports the robot arm;
a beam transmission optical system that is attached to the robot arm and transmits the laser beam;
an optical processing head that irradiates a workpiece with the laser beam; and
a fourth optical path changing section that guides the laser beam to a lateral side of the robot arm.
